# EUROPÄISCHE PATENTSCHRIFT

(11) **EP 4 293 241 B1**
(45) Veröffentlichungstag und Bekanntmachung des Hinweises auf die Patenterteilung: **26.11.2025**
(21) Anmeldenummer: 23177701.2
(22) Anmeldetag: 06.06.2023
(51) Int. Cl.: F16B 5/02, B29C 45/16, B29C 45/26, B60Q 1/04, B60R 11/00, B62D 27/06, B62D 65/16, B60Q 1/068

(54) **EIN VERSTELLELEMENT UND EIN INSTALLATIONSVERFAHREN FÜR EIN ANBAUTEIL MITHILFE DES VERSTELLELEMENTS**
AN ADJUSTING ELEMENT AND A METHOD OF INSTALLING AN ADD-ON PART USING THE ADJUSTING ELEMENT
UN ÉLÉMENT DE RÉGLAGE ET UN PROCÉDÉ D'INSTALLATION D'UN ÉLÉMENT DE MONTAGE À L'AIDE DE L'ÉLÉMENT DE RÉGLAGE

(30) Priorität: 15.06.2022 DE 102022115126
(43) Veröffentlichungstag der Anmeldung: 20.12.2023
(73) Patentinhaber: Böllhoff Verbindungstechnik GmbH, 33649 Bielefeld (DE)
(72) Erfinder: MÜCKE, Michaela, 32760 Detmold (DE); KAHRE, Michael, 32052 Herford (DE); KOLBECK, Christian, 49393 Lohne (DE)
(74) Vertreter: HWP Intellectual Property

(56) Entgegenhaltungen:
- EP-B1- 1 677 012
- WO-A1-2019/110366
- DE-A1- 102016 207 868
- DE-A1- 102021 118 920
- DE-U1- 202007 016 945
- DE-U1- 8 903 907

## Beschreibung

### 1. Gebiet der Erfindung

Die vorliegende Erfindung betrifft ein Verstellelement, mit dem eine Komponente befestigbar und im Raum positionierbar ist. Des Weiteren betrifft vorliegende Erfindung ein Installationsverfahren, mit dem ein Anbauteil mithilfe des Verstellelements an einem Strukturbauteil befestigbar ist. Neben der Befestigung ermöglicht das Verstellelement gleichzeitig eine Positionierung des Anbauteils im Verhältnis zum Strukturbauteil. Zudem umfasst die Erfindung ein Herstellungsverfahren für das Verstellelement.

### 2. Hintergrund der Erfindung

DE 10 2007 002 699 A1 beschreibt eine Befestigungseinrichtung für einen Kraftwagen. Diese Befestigungseinrichtung besteht aus einer Hohlschraube mit einem Außengewinde, die mithilfe eines Gewindebolzens in einer Befestigungsöffnung eine Strukturbauteils befestigt wird. Da der Innendurchmesser der Hohlschraube größer ist als ein Außendurchmesser der Befestigungsschraube, stellt diese Kombination aus Befestigungsschraube und Hohlschraube einen lateralen Toleranzausgleich zur Verfügung. Auf dem Außengewinde der Hohlschraube ist ein Verstellteil mit Innengewinde angeordnet. Durch Drehen des Verstellteils ist die axiale Position des Verstellteils auf der Hohlschraube veränderbar. Mit dem Verstellteil wiederum ist ein Anbauteil derart verbunden, dass zwar eine Rotation des Verstellteils möglich ist, nicht aber ein relativer Versatz zwischen Anbauteil und Verstellteil. Neben der Vielzahl der Bestandteile des Befestigungselements beansprucht die Kombination aus Verstellteil, Hohlschraube und Befestigungsschraube viel Platz, der im Kraftfahrzeug nur begrenzt zur Verfügung steht.

DE 10 2016 207 868 A1 beschreibt ein Montagemodul für eine Fahrzeugleuchte. Dieses Montagemodul setzt sich ebenfalls aus einer Hohlschraube mit einem Außengewinde zusammen. Während die Hohlschraube an einem Strukturbauteil befestigt wird, wird auf ihrem Außengewinde eine Leuchte angeschraubt. In Abhängigkeit von der Einschraubtiefe der Hohlschraube in das Leuchtengehäuse ist die axiale Position der Leuchte in Bezug auf die Hohlschraube einstellbar. Innerhalb der Hohlschraube ist über eine axial feste Drehverbindung eine Befestigungshülse angeordnet. Diese Befestigungshülse stellt eine Befestigungsöffnung bzw. einen Befestigungskanal zur Verfügung, welcher von dem Schaft eines Gewindebolzens durchlaufen wird. Der Gewindebolzen wiederum dient der Befestigung der Hohlschraube an einem Strukturbauteil mithilfe der Befestigungshülse. Während die Befestigungshülse fest am Strukturbauteil verschraubt wird, gewährleistet die axial feste Drehverbindung zwischen Befestigungshülse und Hohlschraube ein Drehen der Hohlschraube trotz Befestigung der Befestigungshülse am Strukturbauteil. Diese axial feste Drehverbindung zwischen Befestigungshülse und Hohlschraube ist relativ aufwendig, da sie trotz der bereitzustellen Bewegbarkeit der Hohlschraube eine ausreichende mechanische Stabilität zum Befestigen der Fahrzeugleuchte über die Lebensdauer des Fahrzeugs bereitstellen muss. Zudem muss über die axial feste Drehverbindung der Abstand zwischen Hohlschraube und Strukturbauteil derart eingestellt sein, dass die Hohlschraube ohne Weiteres drehbar angeordnet ist. Diese erforderliche Genauigkeit stellt hohe Ansprüche an die Herstellung des Montagemoduls im Vergleich zu ähnlichen Konstruktionen des Standes der Technik.

WO 2019/110366 beschreibt ein ähnliches Befestigungsmodul für eine Fahrzeugleuchte wie die zuvor diskutierte DE 10 2016 207 868 A1. Hier wird ebenfalls die Leuchte über ein Außengewinde der Hohlschraube befestigt. Die Hohlschraube wiederum ist an einer Befestigungsöffnung eines Strukturbauteils festgelegt. Zu diesem Zweck weist die Hohlschraube an ihrem dem Strukturbauteil zugewandten axialen Ende eine Lochscheibe auf. Diese Lochscheibe hat eine zentrale Öffnung, die von einem Gewindebolzen durchlaufen werden kann. Zudem ist die Lochscheibe im Inneren der Hohlschraube in einer umlaufenden Nut an einer axial festen Position gehalten. Die Kombination aus Nut und Lochscheibe ermöglicht einen lateralen Versatz, um mögliche Toleranzen zwischen der Hohlschraube und der Befestigungsöffnung im Strukturbauteil ausgleichen zu können. Zur Festlegung des Gewindebolzens, der die Lochscheibe durchläuft, ist in einer Befestigungsöffnung des Strukturbauteils eine Blindnietmutter vorgesehen. In diese Blindnietmuttern wird der Gewindebolzen eingeschraubt. Die Verbindung aus Lochscheibe und Hohlschraube stellt eine axial feste Positionierung der Hohlschraube bei gleichzeitiger Drehbarkeit um ihre Längsachse zur Verfügung. Somit ist es möglich, die Hohlschraube zu drehen, um eine axiale Positionierung der Leuchte auf dem Außengewinde der Hohlschraube zu verändern.

Ein weiteres Verstellelement wird durch DE 20 2007 016 945 U1 offenbart. Dieses Verstellelement befestigt ein Anbauteil im Raum und stellt gleichzeitig einen Toleranzausgleich in den drei Raumrichtungen x, y, z zur Verfügung. Zu diesem Zweck weist das Verstellelement eine Hohlschraube mit einem Innen- und einem Außengewinde auf. In die Hohlschraube ist eine Gewindehülse eingeschraubt, die mithilfe eines Gewindebolzens fest mit einem Strukturbauteil verschraubt werden kann. Da die Gewindehülse in ihrem Innendurchmesser größer ist als der Außendurchmesser des befestigenden Gewindebolzens, gewährleistet die Gewindehülse in Kombination mit der äußeren Hohlschraube einen seitlichen Toleranzausgleich. Ergänzend dazu lässt sich die auf der Gewindehülse angeordnete Hohlschraube axial durch Drehen verstellen, um eine axiale Position eines befestigten Anbauteils zu verändern. Zwar stellt dieses Verstellelement eine große Variabilität im Hinblick auf die Verstellmöglichkeiten in alle drei Raumrichtungen zur Verfügung, ist aber gleichzeitig aufgrund der Anzahl der Einzelteile aufwendig in der Produktion.

Es ist daher die Aufgabe vorliegender Erfindung, ein strukturell einfaches Verstellelement bereitzustellen, welches eine verlässliche Installation eines Anbauteils an einem Strukturbauteil gewährleistet.

### 3. Zusammenfassung der Erfindung

Die obige Aufgabe wird gelöst durch ein Verstellelement gemäß dem unabhängigen Patentanspruch 1, durch ein Strukturbauteil mit einer Befestigungsöffnung gemäß dem unabhängigen Patentanspruch 7, an der das Verstellelement mit einem Gewindebolzen befestigt ist, sowie durch ein Installationsverfahren gemäß dem unabhängigen Patentanspruch 9, mit dem ein Anbauteil, insbesondere eine Leuchte, an einem Strukturbauteil, insbesondere einer Fahrzeugkarosserie, befestigbar und positionierbar ist. Des Weiteren löst obige Aufgabe ein Herstellungsverfahren des Verstellelements gemäß dem unabhängigen Patentanspruch 12. Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Mit dem erfindungsgemäßen Verstellelement ist eine Komponente befestigbar und im Raum positionierbar. Positionierbar bedeutet, dass die Komponente im befestigten Zustand des Verstellelements in axialer Richtung des Verstellelements durch Drehen einer Hohlschraube auf der Hohlschraube versetzbar ist. Dadurch wird ein Abstand zwischen Komponente und Strukturbauteil geändert. Das erfindungsgemäße Verstellelement weist die folgenden Merkmale auf: eine hülsenartige Hohlschraube mit einem ersten und einem zweiten axialen Ende, einem Antriebsmerkmal und einem Außengewinde, an dem eine Komponente haltbar und in axialer Richtung der Hohlschraube positionierbar ist, benachbart zu dem ersten axialen Ende weist die Hohlschraube einen integral ausgebildeten und radial einwärts ragenden Befestigungskragen auf, der eine rohrförmige Befestigungsöffnung der Hohlschraube umläuft, und innerhalb der rohrförmigen Befestigungsöffnung ist eine axiale Stützhülse angeordnet, sodass die Hohlschraube mit einem Befestigungsmittel an einem Bauteil drehbar befestigbar ist, welches die axiale Stützhülse durchläuft.

Erfindungsgemäß bevorzugt besteht das Verstellelement aus der hülsenartigen Hohlschraube. Diese weist an ihrer Außenseite ein Außengewinde auf, welches in einer Komponente, beispielsweise ein Anbauteil wie eine Fahrzeugleuchte, durch Einschrauben in eine entsprechende Öffnung befestigbar ist. Dafür eignet sich beispielsweise als Außengewinde ein selbstfurchendes oder selbsthemmendes Gewinde. Natürlich ist es ebenfalls bevorzugt, andere Gewindeformen einzusetzen, die einen verlässlichen Halt zwischen der Hohlschraube und dem Anbauteil gewährleisten.

Das sich entlang der Längsachse der Hohlschraube erstreckende Außengewinde an der Außenseite gewährleistet mithilfe des Drehens der Hohlschraube eine Positionierbarkeit des Anbauteils in axialer Richtung der Hohlschraube bzw. des Verstellelements. Auch nach der Installation oder Befestigung des Verstellelements an einem Strukturbauteil, beispielsweise einer Fahrzeugkarosserie, ermöglicht die bevorzugte Art der Befestigung der Hohlschraube ein Drehen der Hohlschraube um deren Längsachse. Gleichzeitig ist die Position der Hohlschraube festgelegt, sodass lediglich ein Freiheitsgrad für die Drehung der Hohlschraube besteht. Vorzugsweise wird diese Funktion des Verstellelements durch einen radial einwärts ragenden Befestigungskragen innerhalb der hülsenartigen Hohlschraube gewährleistet. Dieser Befestigungskragen stellt vorzugsweise aufgrund seiner axialen Erstreckung eine rohrförmige Befestigungsöffnung der Hohlschraube zur Verfügung. Diese rohrförmige Befestigungsöffnung durchläuft das Befestigungsmittel, vorzugsweise ein Gewindebolzen, um diesen in eine Gewindeöffnung eines Strukturbauteils, hier vorzugsweise die Fahrzeugkarosserie, einzuschrauben. Es ist ebenfalls bevorzugt, einen Blindniet, einen Rastbolzen oder ähnliches als Befestigungsmittel zu nutzen, die in einer Befestigungsöffnung des Strukturbauteils gehalten sind.

Um eine Drehung der Hohlschraube auch nach Befestigung der Hohlschraube an dem Strukturbauteil mithilfe des Gewindebolzens bereitzustellen, ist eine axiale Stützhülse innerhalb der rohrförmigen Befestigungsöffnung der Hohlschraube angeordnet. Diese Stützhülse sorgt vorzugsweise für eine Blockverschraubung oder Blockbefestigung zwischen dem Befestigungsmittel und dem Strukturbauteil, wobei gleichzeitig eine ausreichende drehende Bewegbarkeit der Hohlschraube um die Stützhülse erhalten bleibt. Somit weist das erfindungsgemäße Verstellelement trotz seiner funktionellen Komplexität eine relativ einfache Konstruktion auf. Auf diese Weise reduziert sich der Installationsaufwand in gleicher Weise wie der Herstellungsaufwand des Verstellelements.

Gemäß einer bevorzugten Ausgestaltung des erfindungsgemäßen Verstellelements schließt die axiale Stützhülse am ersten axialen Ende mit der Hohlschraube bündig ab und ragt gleichzeitig über ein innerhalb der Hohlschraube liegendes Ende der rohrförmigen Befestigungsöffnung hinaus, sodass die Hohlschraube mit dem Befestigungsmittel drehbar befestigbar ist.

Erfindungsgemäß bevorzugt ist die axiale Stützhülse länger ausgebildet als eine Längserstreckung der rohrförmigen Befestigungsöffnung. Dies eröffnet die Möglichkeit, dass die Stützhülse an einer Position einer Befestigungsöffnung im Strukturbauteil mithilfe des Befestigungsmittels, insbesondere ein Gewindebolzen, festgelegt wird, wobei weiterhin ein Drehen der Hohlschraube um die Stützhülse gewährleistet ist. Damit ist die Hohlschraube fest im Raum positioniert, während ein bevorzugtes Drehen der Hohlschraube einen axialen Versatz eines auf dem Außengewinde der Hohlschraube befestigten Anbauteils ermöglicht.

Um die Stützhülse vorzugsweise in einer Blockverschraubung oder allgemein einer Blockbefestigung an dem Strukturbauteil zu befestigen, stützt sich das die Stützhülse durchlaufende Befestigungsmittel, vorzugsweise der Gewindebolzen, mit der Unterseite seines Kopfes an dem inneren axialen Ende der Stützhülse bezogen auf die Hohlschraube ab. Gemäß unterschiedlichen bevorzugten Ausgestaltungen wird dieses Abstützen durch einen in radialer Richtung ausreichend großen Kopf des Gewindebolzens oder durch eine entsprechende Stützscheibe zwischen der Unterseite des Kopfes des Gewindebolzens oder allgemein dem Befestigungsmittel und dem benachbarten axialen Ende der Stützhülse realisiert.

Gemäß einer weiteren bevorzugten Ausführungsform vorliegender Erfindung ist an dessen innerhalb der Hohlschraube liegendem Ende der axialen Stützhülse die bereits oben angesprochene Stützscheibe mit einer zentralen Öffnung angeordnet, deren äußerer Scheibendurchmesser einen Außendurchmesser der axialen Stützhülse übersteigt und deren Öffnungsdurchmesser kleiner ist als ein Innendurchmesser der axialen Stützhülse, sodass ein lateraler Toleranzausgleich über eine Kombination der axialen Stützhülse, der Stützscheibe und das Befestigungsmittel, vorzugsweise der Gewindebolzen, bereitstellbar ist.

Die erfindungsgemäß bevorzugte Stützscheibe mit der zentralen Öffnung vermittelt die reibschlüssige Verbindung zwischen dem Befestigungsmittel der Stützhülse und dem Strukturbauteil. Zudem gewährleistet die Stützscheibe, dass auch ein bevorzugter Gewindebolzen verwendet werden kann, dessen Kopfdurchmesser geringer ist als ein Innendurchmesser der Stützhülse. Zudem unterstützt die Stützscheibe einen radialen Versatz eines Schafts des Befestigungsmittels oder des Gewindebolzens innerhalb der Stützhülse, um eventuelle Toleranzen ausgleichen zu können. Auf diese Weise ist es möglich, dass der befestigenden Gewindebolzen auch außermittig, d. h. zwar parallel, aber nicht koaxial zur Längsachse der Stützhülse, diesen durchläuft und die Hohlschraube an dem Strukturbauteil befestigt. Zudem stellt die Stützscheibe vorzugsweise sicher, dass die mechanischen Haltekräfte von der Unterseite des Kopfes des Befestigungsmittels oder des Gewindebolzens über die Stützscheibe auf den gesamten benachbarten Rand der Stützhülse übertragen werden. Auf diese Art wird die durch den Gewindebolzen aufgebaute mechanische Haltespannung gleichmäßig auf das Strukturbauteil übertragen.

Gemäß einer weiteren bevorzugten Ausgestaltung des erfindungsgemäßen Verstellelements weist die Hohlschraube an einer Innenseite und/oder einer Außenseite das Antriebsmerkmal und an der Innenseite kein Innengewinde auf.

Um die Funktonalität der Hohlschraube für ein axiales Positionieren eines Anbauteils auf der äußeren Gewindeseite der Hohlschraube gewährleisten zu können, ist vorzugsweise mindestens ein Antriebsmerkmal vorgesehen. Dieses Antriebsmerkmal ist gemäß einer ersten bevorzugten Ausführungsform im Inneren, also vorzugsweise an der Innenseite der hohlzylindrischen Hohlschraube angeordnet. Dieses Antriebsmerkmal bildet die Grundlage für den Eingriff eines Werkzeugs, sodass sich eine formschlüssige Verbindung zwischen der Innenseite der Hohlschraube und dem Werkzeug ausbildet. Diese formschlüssige Verbindung ermöglicht ein Drehen der Hohlschraube, ohne jedoch bevorzugt die Hohlschraube in axialer Richtung zu belasten oder zu versetzen.

Gemäß einer weiteren bevorzugten Ausgestaltung ist ein Antriebsmerkmal an der Außenseite der Hohlschraube vorgesehen. Dieses außenliegende Antriebsmerkmal ist beispielsweise ein Mehrkant, um mit einem entsprechend formschlüssig wirkenden Werkzeug die Hohlschraube durch einen Angriff von außen drehen zu können.

Gemäß einer weiteren bevorzugten Ausgestaltung sind sowohl ein inneres sowie ein äußeres Antriebsmerkmal an der Hohlschraube des Verstellelements vorgesehen, um die größtmögliche Flexibilität zum axialen Positionieren eines Anbauteils auf dem Außengewinde der Hohlschraube des Verstellelement bereitstellen zu können.

Gemäß einer weiteren bevorzugten Ausgestaltung des erfindungsgemäßen Verstellelements ist an der Innenseite der hohlzylindrischen Hohlschraube kein Gewinde vorgesehen. Auf diese Weise wird ein zusätzlicher Herstellungsaufwand vermieden, da lediglich das Befestigungselement oder der Gewindebolzen in die rohrförmige Befestigungsöffnung eingreifen muss. Dies erfordert aber nicht die Notwendigkeit eines inneren Gewindes, da keine Schraubverbindung zwischen dem Gewindebolzen oder einer anderen im Inneren der Hohlschraube angeordneten Hülse oder Komponente vorgesehen ist.

Anknüpfend an die obige Beschreibung weist gemäß einer bevorzugten Ausführungsform die Hohlschraube am ersten axialen Ende einen äußeren Mehrkant als Antriebselement auf, der zumindest teilweise die rohrförmige Befestigungsöffnung umgibt.

Gemäß einer weiteren bevorzugten Ausgestaltung des erfindungsgemäßen Verstellelements weist die Hohlschraube benachbart zum zweiten axialen Ende ein formschlüssiges inneres Antriebsmerkmal, insbesondere einen inneren Mehrkant, auf.

Zudem ist es ebenfalls bevorzugt, die oben genannten bevorzugt Antriebsmerkmale miteinander in der Hohlschraube zu kombinieren.

Gemäß einer weiteren bevorzugten Ausführungsform vorliegender Erfindung weisen die Hohlschraube und/oder die Stützhülse einen Rest einer gelösten und zuvor verbindenden Sollbruchstelle zwischen der Stützhülse und der Hohlschraube auf.

Gemäß einer bevorzugten Herstellungsroute des Verstellelements werden die Hohlschraube und die Stützhülse gemeinsam in einem Spritzgusswerkzeug bzw. einer Spritzgussform hergestellt. Während des Spritzgießens entstehen die Hohlschraube und die Stützhülse als ein zusammenhängendes Teil, die über eine Sollbruchstelle miteinander verbunden sind. Während des Entformens von Hohlschraube und Stützhülse an dem Spritzgusswerkzeug werden die Sollbruchstelle gelöst und die Stützhülse in die Hohlschraube eingesetzt.

Gemäß einer weiteren bevorzugten Ausführungsform des Verstellelements bestehen die Hohlschraube und die Stützhülse aus demselben Kunststoff oder aus verschiedenen Kunststoffen.

Das oben beschriebene Spritzgussverfahren wird je nach Anforderung an das Verstellelement als 1K-Spritzgussverfahren oder als 2K-Spritzgussverfahren realisiert. Daraus folgt, dass die Hohlschraube und die Stützhülse aus dem gleichen Kunststoff bestehen, wenn ein 1K-Spritzgussverfahren genutzt wird. Oder die Hohlschraube und die Stützhülse bestehen aus unterschiedlichen Kunststoffen bei der Nutzung eines 2K-Spritzgussverfahrens.

Vorliegende Erfindung offenbart zudem ein Strukturbauteil mit einer Befestigungsöffnung, an der das Verstellelement gemäß einer der oben beschriebenen bevorzugten Ausgestaltungen mit einem Befestigungsmittel, vorzugsweise ein Gewindebolzen, ein Blindniet und ähnliche, befestigt ist. Gemäß einer bevorzugten Ausführungsform vorliegender Erfindung wird das Strukturbauteil durch eine Fahrzeugkarosserie gebildet. Die Befestigungsöffnung weist vorzugsweise ein Gewinde auf, welches direkt in der Öffnung vorgesehen ist, welches durch eine Blindnietmutter bereitgestellt wird oder welches durch eine Schweißmutter bereitgestellt wird.

Gemäß einer weiteren bevorzugten Ausgestaltung des erfindungsgemäßen Strukturbauteils ist auf dem Außengewinde der Hohlschraube des Verstellelements ein Bauteil, vorzugsweise eine Fahrzeugleuchte, derart befestigt, dass Toleranzen zwischen dem Strukturbauteil und dem Bauteil einstellbar sind.

Aufgrund seiner bevorzugten Konstruktion und Befestigung ist die Hohlschraube innerhalb des Verstellelements auch im befestigten Zustand drehbar angeordnet. Somit ist zunächst durch die Gewindeverbindung zwischen dem Bauteil und der Hohlschraube eine Position des Bauteils in Bezug auf das Strukturbauteil fixiert. Die zur Verfügung stehende Drehung des Verstellelements mithilfe der Hohlschraube gewährleistet neben der Positionierung des Bauteils relativ zum Strukturbauteil eine Veränderung des relativen Abstands zwischen dem Bauteil und dem Strukturbauteil. Denn mit Drehung der Hohlschraube wird das Bauteil auf dem Außengewinde der Hohlschraube in axialer Richtung versetzt, was wiederum den Abstand zwischen dem Strukturbauteil und dem Bauteil auf der Hohlschraube verändert.

Vorzugsweise ist das Außengewinde der Hohlschraube für diesen Zweck als selbsthemmendes Gewinde ausgestaltet. Daher wird trotz des Axialversatzes des Bauteils in Bezug auf der Strukturbauteil basierend auf der Drehung der Hohlschraube ein verlässlicher Halt des Bauteils auf dem Außengewinde der Hohlschraube gewährleistet.

Vorliegende Erfindung offenbart zudem ein Installationsverfahren, mit dem ein anderes Teil, insbesondere eine Leuchte, an einem Strukturbauteil, insbesondere eine Fahrzeugkarosserie, befestigbar und positionierbar ist. Das Installationsverfahren weist die folgenden Schritte auf: Einschrauben einer Hohlschraube des oben beschriebenen Verstellelements gemäß den unterschiedlichen bevorzugten Konstruktionsalternativen in einer Halteöffnung des Anbauteils, Befestigen der Hohlschraube mit Anbauteil an einer Befestigungsöffnung des Strukturbauteils mit einem Befestigungsmittel, das innerhalb der rohrförmigen Befestigungsöffnung des Befestigungskragens angeordnet ist, und Drehen der Strukturbauteil befestigten Hohlschraube, sodass das Anbauteil entlang einer Längsachse der Hohlschraube versetzt wird.

Das erfindungsgemäße Installationsverfahren baut auf der platzsparenden und wirtschaftlichen Konstruktion des oben beschriebenen Verstellelements auf. Entsprechend wird es mit geringem Aufwand hergestellt und nachfolgend auch installiert. In einem ersten Schritt wird die bevorzugte Hohlschraube des Verstellelements in eine Halteöffnung des Anbauteils, vorzugsweise eine Fahrzeugleuchte, eingeschraubt. Nachfolgend wird die Hohlschraube in einer Gewindeöffnung des Strukturbauteils, vorzugsweise der Fahrzeugkarosserie, mithilfe eines Gewindebolzens befestigt. Die Gewindeöffnung besteht gemäß unterschiedlicher bevorzugte Ausführungsformen vorliegender Erfindung aus einer Bohrung mit Innengewinde, einer in einer Bohrung befestigten Blindnietmutter oder aus einer Schweißmutter, die angrenzend an eine Öffnung angeordnet ist. Durch die Gewindeverbindung der Hohlschraube mit dem Strukturbauteil mithilfe des Gewindebolzens wird die Positionierung des Anbauteils in Bezug auf das Strukturbauteil festgelegt. In dieser Befestigung zwischen Anbauteil und Strukturbauteil hat lediglich die Hohlschraube den Freiheitsgrad, sich zu drehen. Dieser Freiheitsgrad wird vorzugsweise mithilfe eines Werkzeugs genutzt, um einen Abstand zwischen dem Strukturbauteil und im Anbauteil einzustellen. Entsprechend greift ein Werkzeug in die Hohlschraube ein oder an der Hohlschraube an und dreht diese um ihre Längsachse. Auf diese Weise wird das auf dem Außengewinde der Hohlschraube befestigte Anbauteil entlang der Längsachse der Hohlschraube versetzt, bis der passende Abstand zwischen Strukturbauteil und Anbauteil erreicht ist.

Gemäß einer weiteren bevorzugten Ausgestaltung des erfindungsgemäßen Installationsverfahrens weist dieses den weiteren Schritt auf: Bereitstellen der Befestigungsöffnung des Strukturbauteils mit einem Gewinde, vorzugsweise mittels einer Schweißmutter oder einer Blindnietmutter, welches passend zu einem Gewindebolzen als Befestigungsmittel ausgebildet ist.

Das erfindungsgemäße Installationsverfahren weist gemäß einer weiteren bevorzugten Ausgestaltung den folgenden Schritt auf: Anordnen des Gewindebolzens in Kombination mit einer Unterlegscheibe innerhalb der axialen Stützhülse, sodass die Hohlschraube am Strukturbauteil drehbar befestigt ist.

Gemäß einer bevorzugten konstruktiven Ausgestaltung der Stützhülse innerhalb des Verstellelements ragt das axial innenliegende Ende der Stützhülse über den radial einwärts ragenden Befestigungskragen hinaus. Wird das Verstellelement mithilfe eines Gewindebolzens und einer Unterlegscheibe befestigt, stützt sich die Unterlegscheibe auf dem inneren axialen Ende der Stützhülse ab, während der Gewindebolzen eine reibschlüssige Verbindung zur Gewindeöffnung im Strukturbauteil herstellt. Die bevorzugte umlaufende Abstützung der Unterlegscheibe auf dem freien axialen Ende der Stützhülse erlaubt ein bevorzugtes radiales Versetzen des Gewindebolzens im inneren Freiraum der Stützhülse. Auf diese Weise sind in lateraler Richtung Toleranzen zwischen der Befestigungsöffnung im Strukturbauteil und der Anordnung des Verstellelements und somit des am Verstellelement angeordneten Anbauteils realisierbar. Insgesamt eröffnet somit das Verstellelement bevorzugt nicht nur einen Toleranzausgleich in axialer Richtung also in Längsrichtung der Hohlschraube sondern auch einen Toleranzausgleich senkrecht zur Längsachse der Hohlschraube aufgrund der Kombination von Stützhülse und Gewindebolzen.

Zudem gewährleistet bevorzugt die Auflage der Unterlegscheibe oder des Kopfes des Gewindebolzens auf dem freien inneren axialen Ende der Stützhülse. dass sich die Hohlschraube um die Stützhülse trotz Befestigung durch den Gewindebolzen frei drehen kann. Denn die Schraubverbindung zwischen dem Gewindebolzen und dem Strukturbauteil erzeugt keine unbewegliche reibschlüssige Verbindung zwischen der Hohlschraube und dem Strukturbauteil. Vielmehr gewährleistet der axiale Überstand des inneren Endes der Stützhülse einen Freiraum zwischen der Unterlegscheibe oder der Unterseite des Kopfes des Gewindebolzens und dem Strukturbauteil. Daher ist es möglich, dass das Verstellelement, insbesondere die Hohlschraube, auch in befestigtem Zustand am Strukturbauteil durch ein entsprechendes Werkzeug gedreht werden kann.

Das erfindungsgemäße Installationsverfahren weist gemäß einer weiteren bevorzugten Ausführungsform folgenden Schritt auf: Drehen der befestigten Hohlschraube über ein äußeres oder ein inneres Antriebsmerkmal, um die axiale Position des Anbauteils auf der Hohlschraube zu verändern.

Vorliegende Erfindung offenbart zudem ein Spritzgussverfahren mit dem ein Verstellelement gemäß einer der oben beschriebenen Ausgestaltungen herstellbar ist und welches die folgenden Schritte aufweist: Bereitstellen einer Spritzgussform mit den komplementären Formmerkmalen zu dem Verstellelement, Spritzgießen des Verstellelements mit einem ersten Kunststoff.

Verzugsweise erfolgt ein Spritzgießen einer Stützhülse in der Spritzgussform, sodass die Hohlschraube und die Stützhülse bestehend aus dem gleichen Kunststoff und verbunden über eine Sollbruchstelle vorliegen.

Gemäß einer weiteren bevorzugten Ausgestaltung des Spritzgussverfahrens erfolgt ein Entformen der Hohlschraube mit der Stützhülse, wobei die Hohlschraube und die Stützhülse an der Sollbruchstelle voneinander getrennt und die Stützhülse in der rohrförmigen Befestigungsöffnung angeordnet wird.

Da die Hohlschraube und die Stützhülse nach dem bevorzugten Trennen während des Entformens nicht nachgearbeitet werden, weisen die Hohlschraube und/oder die Stützhülse einen Rest der getrennten Sollbruchstelle auf.

Gemäß einer weiteren bevorzugten Ausgestaltung vorliegender Erfindung ist das Spritzgussverfahren ein 1K-Spritzgussverfahren und die Hohlschraube und die Stützhülse bestehen aus dem gleichen Kunststoff oder das Spritzgussverfahren ist ein 2K-Spritzgussverfahren und die Hohlschraube und die Stützhülse bestehen aus unterschiedlichen Kunststoffen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile, Merkmale und/oder Elemente. Es zeigen:
- Figur 1: eine bevorzugte Ausführungsform einer Verbindung zwischen einem Strukturbauteil und einem Anbauteil mit Hilfe eines bevorzugten Verstellelements in einer seitlichen Schnittansicht,
- Figur 2: eine bevorzugte Ausführungsform einer Hohlschraube als Bestandteil des erfindungsgemäßen Verstellelements,
- Figur 3: eine bevorzugte Ausführungsform des Verstellelements in einer axialen Draufsicht von der Seite abgewandt von dem Befestigungskragen,
- Figur 4: eine perspektivische Seitenansicht einer bevorzugten Ausführungsform der Hohlschraube mit der noch nicht in der rohrförmigen Befestigungsöffnung angeordneten Stützhülse,
- Figur 5: eine perspektivische Seitenansicht einer bevorzugten Ausführungsform der Hohlschraube mit der in der rohrförmigen Befestigungsöffnung angeordneten Stützhülse,
- Figur 6: verschiedene bevorzugte Ausführungsformen der Stützhülse,
- Figur 7: eine bevorzugte Ausgestaltung der Stützhülse mit äußerer Verrippung,
- Figur 8: eine perspektivische Draufsicht auf die Seite der bevorzugten Hohlschraube abgewandt von dem Befestigungskragen,
- Figur 9: eine seitliche Schnittansicht der bevorzugten Hohlschraube mit einem inneren formschlüssigen Antriebsmerkmal,
- Figur 10: eine perspektivische Draufsicht auf die Seite der bevorzugten Hohlschraube abgewandt von dem Befestigungskragen mit einem anderen inneren formschlüssigen Antriebsmerkmal,
- Figur 11: eine perspektivische Seitenansicht eines Bauteils verbunden mit einem Strukturbauteil mit Hilfe des bevorzugten Verstellelements,
- Figur 12: eine seitliche Schnittansicht eines Bauteils verbunden mit dem bevorzugten Verstellelement in einer unbefestigten Anordnung des Verstellelements in einer Befestigungsöffnung des Strukturbauteils,
- Figur 13: eine seitliche Schnittansicht eines Bauteils verbunden mit dem bevorzugten Verstellelement in einer befestigten Anordnung des Verstellelements in einer BefestigungsÖffnung des Strukturbauteils,
- Figur 14: eine perspektivische Ansicht einer Verbindung aus Strukturbauteil und Bauteil mit einem Werkzeug zur Verstellung des Verstellelements,
- Figur 15: eine weitere perspektivische Ansicht einer Verbindung aus Strukturbauteil und Bauteil mit einem Werkzeug zur Verstellung des Verstellelements,
- Figuren 16-18: einzelne bevorzugte Sequenzen des Installationsverfahrens des Verstellelements während des Verbindens von Strukturbauteil und Anbauteil,
- Figuren 19-20: einzelne bevorzugte Sequenzen des Einstellverfahrens des Verstellelements zur Einstellung eines axialen Abstands zwischen den Strukturbauteil und dem Anbauteil, während des Verbindens von Strukturbauteil und Anbauteil,
- Figur 21: eine bevorzugte seitliche Schnittdarstellung einer Verbindung von Strukturbauteil und Anbauteil über das bevorzugte Verstellelement in Kombination mit einem formschlüssig wirkenden Werkzeug zum Drehen der Hohlschraube

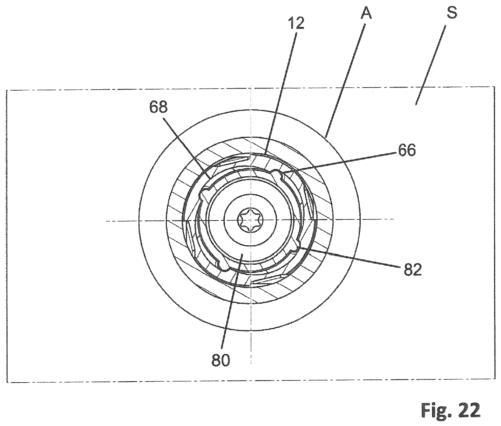

- Figur 22: eine bevorzugte radiale Schnittansicht des Verstellelements von der Seite abgewandt von dem Befestigungskragen mit einem formschlüssig eingreifenden Werkzeug zur Drehung der Hohlschraube,
- Figur 23: eine seitliche Schnittansicht eines Bauteils verbunden mit dem bevorzugten Verstellelement mittels eines alternativen Befestigungsmittels in einer befestigten Anordnung des Verstellelements in einer Befestigungsöffnung des Strukturbauteils,
- Figur 24: eine Draufsicht auf das Strukturbauteil gemäß Figur 23,
- Figur 25: eine seitliche Schnittansicht eines Bauteils verbunden mit dem bevorzugten Verstellelement mittels eines weiteren alternativen Befestigungsmittels in einer unbefestigten Anordnung des Verstellelements in einer Befestigungsöffnung des Strukturbauteils,
- Figur 26: eine seitliche Schnittansicht eines Bauteils verbunden mit dem bevorzugten Verstellelement mittels des weiteren alternativen Befestigungsmittels in einer befestigten Anordnung des Verstellelements in einer Befestigungsöffnung des Strukturbauteils, und

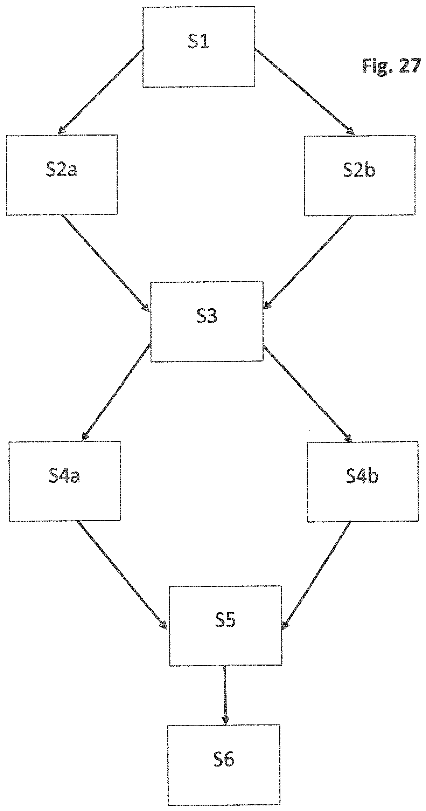

- Figur 27: ein Flussdiagramm einer bevorzugten Ausführungsform eines Installationsverfahrens des Verstellelements.

### 5. Detaillierte Beschreibung der bevorzugten Ausführungsformen vorliegender Erfindung

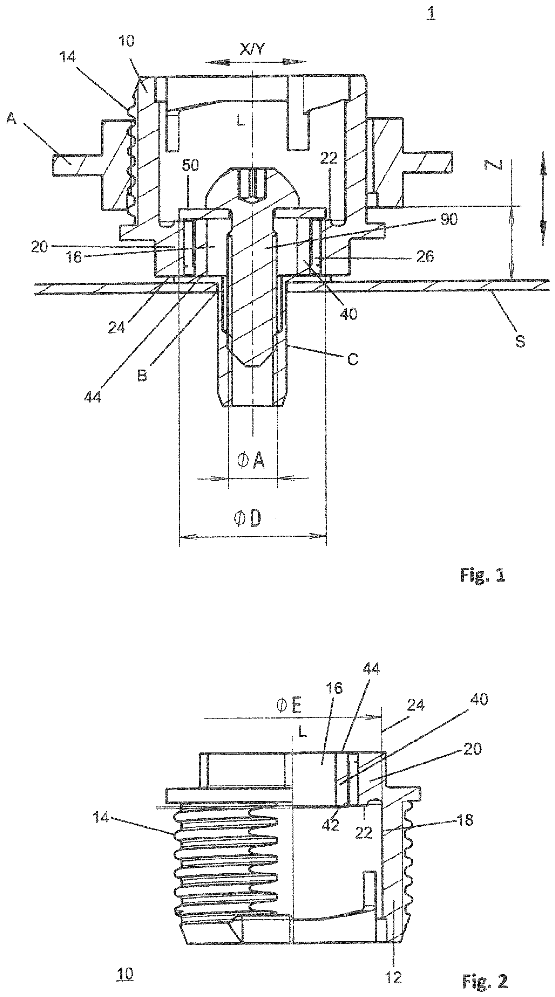

Figur 1 zeigt eine bevorzugte Ausführungsform einer Verbindung von einem Strukturbauteil S, vorzugsweise eine Fahrzeugkarosserie, mit einem Bauteil oder Anbauteil A, vorzugsweise eine Fahrzeugleuchte. Das Strukturbauteil S und das Anbauteil A sind über ein erfindungsgemäßes Verstellelement 1 miteinander verbunden, welches in einer bevorzugten Ausführungsform in Figur 1 in einer Schnittdarstellung zu erkennen ist.

Das Strukturbauteil S weist eine Befestigungsöffnung B mit einem Innengewinde auf. Die bevorzugte Befestigungsöffnung B wird gemäß einer bevorzugten Ausführungsform vorliegender Erfindung durch eine Blindnietmutter C mit Innengewinde oder durch eine Schweißmutter (nicht gezeigt) oder durch eine Gewindeöffnung direkt im Strukturbauteil S bereitgestellt.

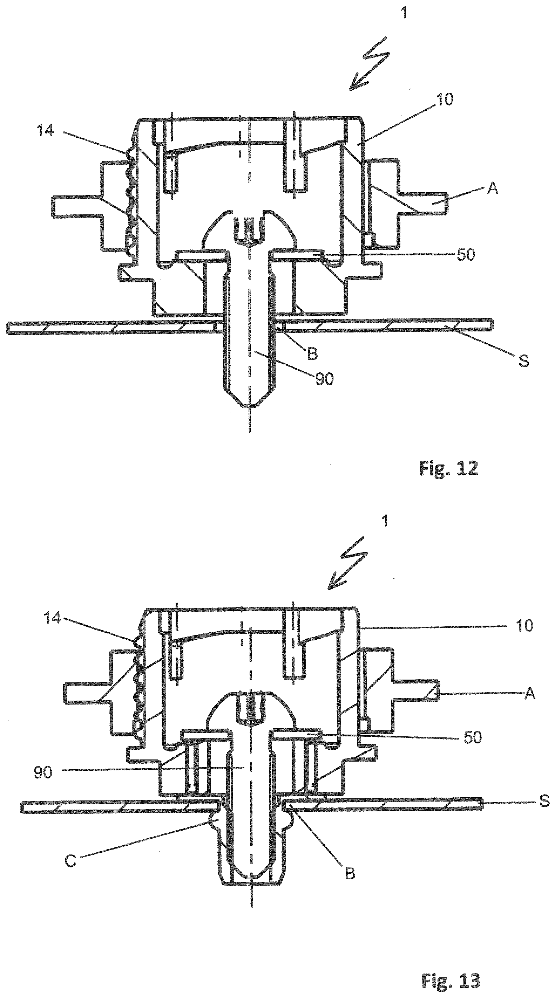

Figur 1 zeigt die bevorzugte Blindnietmutter C in einem noch unverkrimpten Zustand in der Befestigungsöffnung B. Figur 13 zeigt eine bevorzugte Ausführungsform, in der die Blindnietmutter C bereits in der Befestigungsöffnung B des Strukturbauteils S befestigt worden ist.

Es ist ebenfalls bevorzugt, das Strukturbauteil mit einer gewindelosen Öffnung vorzusehen. An dieser Öffnung lässt sich das Verstellelement 1 mit einem Blindniet, einer Steckverbindung, einer Bajonettverbindung, einem Raststift und ähnlichem befestigen.

Im Folgenden wird als beispielgebendes Befestigungsmittel ein Gewindebolzen 90 beschrieben.

Das bevorzugte Verstellelement 1 gemäß Figur 1 besteht aus einer hülsenartigen Hohlschraube 10. Die hülsenartige Hohlschraube 10 ist ähnlich einem Hohlzylinder geformt mit einer umlaufenden Wand 12. Die umlaufende Wand 12 weist an einer radialen Außenseite ein Außengewinde 14 auf. Mit dem Außengewinde 14 wird die Hohlschraube 10 und damit das Verstellelement 1 mit dem bevorzugten Anbauteil A verschraubt.

Vorzugsweise hat das Außengewinde 14 eine selbsthemmende Konfiguration. Die Hohlschraube 10 kann somit in einer Öffnung des Anbauteils A gedreht werden, ohne dass sich die Gewindeverbindung zwischen der Hohlschraube 10 und dem Anbauteil A lockert.

Die Gewindeverbindung zwischen der Hohlschraube 10 und dem Anbauteil A hat den Vorteil, dass ein Drehen der Hohlschraube 10 um deren Längsachse L das Anbauteil A relativ zur Hohlschraube 10 in Richtung der Längsachse L der Hohlschraube 10 versetzt. Auf diese Weise ist bevorzugt ein Abstand Z zwischen dem Anbauteil A und dem Strukturbauteil S veränderbar und einstellbar, wie Figur 1 zeigt.

Zu diesem Zweck ist die Hohlschraube 10 vorzugsweise um ihre Längsachse L drehbar am Strukturbauteil S befestigt. Die Befestigung ist unten näher erläutert.

Weiterhin bevorzugt ist die Hohlschraube 10 über einen zentralen Gewindebolzen 90 mit dem Strukturbauteil S drehbar verschraubt. Der Gewindebolzen 90 ist in einer rohrförmigen Befestigungsöffnung 16 der Hohlschraube 10 angeordnet. Ein Innendurchmesser der Befestigungsöffnung 16 ist größer als ein Außendurchmesser eines Schafts 92 des Gewindebolzens 90. Basierend auf dieser bevorzugten geometrischen Konfiguration ist die Hohlschraube 10 radial relativ zum Schaft 92 des Gewindebolzens 90 versetzbar, bevor der Gewindebolzen 90 fest mit dem Strukturbauteil S verschraubt wird (siehe unten). Betrachtet man das Strukturbauteil S, an dem die Hohlschraube 10 befestigt wird, als eine x-y-Befestigungsebene mit der darin angeordneten Befestigungsöffnung B, dann ist die Hohlschraube 10 zum Toleranzausgleich in x-y-Richtung auf der Ebene des Strukturbauteils S versetzbar, bevor der Gewindebolzen 90 festgezogen wird (siehe Figur 1).

Somit realisiert das Verstellelement 1 neben dem Verbinden des Anbauteils A mit dem Strukturbauteil S einen Toleranzausgleich in allen drei Raumrichtungen x, y, z zwischen dem Strukturbauteil S und dem Anbauteil A. Die bevorzugte Verstellmöglichkeit gewährleistet beispielsweise im Fahrzeugbau die Einstellung von gewünschten Spaltmaßen zwischen einer Fahrzeugkarosserie und einer Fahrzeugleuchte.

Eine ebenfalls bevorzugte Ausführungsform der Hohlschraube 10 zeigt Figur 2. Die Hohlschraube 10 erstreckt sich entlang der Längsachse L mit dem Gewinde 14 an der radialen Außenwand. Die umlaufende Wand 12 weist vorzugsweise an einer radialen Innenseite 18 kein Gewinde auf.

Weiterhin weist die Hohlschraube 10 an einem ersten axialen Ende einen radial einwärts ragenden Befestigungskragen 20 auf. Der Befestigungskragen 20 läuft vorzugsweise im Inneren der Hohlschraube 10 geschlossen um und definiert dadurch eine rohrförmige Befestigungsöffnung 16.

Vorzugsweise hat der Befestigungskragen 20 einen inneren radial umlaufenden Rand 22 und einen äußeren radial umlaufenden Rand 24.

Im installierten Zustand des Verstellelements 1 stützt sich der äußere Rand 24 direkt auf dem Strukturbauteil S oder benachbart dazu, vorzugsweise auf dem Haltekragen einer Blindnietmutter C, ab. Innerhalb der rohrförmigen Befestigungsöffnung 16 ist eine axiale Stützhülse 40 angeordnet.

Vorzugsweise ist die Stützhülse 40 länger als ein axialer Abstand zwischen dem inneren Rand 22 und dem äußeren Rand 24 des Befestigungskragens 20 ausgebildet. Ist die Hohlschraube 10 an dem Strukturbauteil S befestigt, stützt sich der äußere Rand 24 und das benachbarte axiale Ende 44, also das axial nach außen gewandte Ende 44 der Stützhülse 40, am Strukturbauteil S ab. Entsprechend sind der äußere Rand 24 und das Ende 44 bündig zueinander ausgerichtet. Aufgrund der axialen Länge der Stützhülse 40 im Vergleich zu einer Länge der rohrförmigen Befestigungsöffnung 16 ausgedrückt durch den axialen Abstand der Ränder 22, 24 ragt das nach innen gewandte Ende 42 der Stützhülse 40 über den inneren Rand 22 hinaus.

Das axial innere Ende 42 der Stützhülse 40 bildet vorzugsweise eine ringförmige Auflage für eine Stützscheibe 50. Die Stützscheibe 50 liegt auf dem axial inneren Ende 42 der Stützhülse 40 auf. Zu diesem Zweck ist bevorzugt ein Außendurchmesser der Stützscheibe 50 größer als ein Außendurchmesser der Stützhülse 40. Dies gewährleistet, dass die Stützscheibe 50 vollständig auf der Stützhülse 40 aufliegt, um vorzugsweise die mechanischen Befestigungsspannungen von der Unterseite des Kopfes des Gewindebolzens 90 über die Stützhülse 40 in das Strukturbauteil S einzuleiten.

Die Stützhülse 40 hat vorzugsweise eine zentrale Öffnung 52. Die zentrale Öffnung 52 durchläuft der Schaft 92 des Gewindebolzens 90, um die Hohlschraube 10 in der Befestigungsöffnung B des Strukturbauteils S zu befestigen.

Der bevorzugte Längenunterschied zwischen der rohrförmigen Befestigungsöffnung 16 und der Stützhülse 40 garantiert einen Abstand zwischen dem inneren Rand 22 des Befestigungskragens 20 und einer dem inneren Rand 22 zugewandten Seite der Stützscheibe 50 im befestigten Zustand der Hohlschraube 10.Dieser Abstand stellt sicher, dass die Hohlschraube 10 auch im befestigten Zustand, also verschraubt mit dem Strukturbauteil S, um seine Längsachse L drehbar ist.

Somit kann vorzugsweise im befestigten Zustand der Hohlschraube 10 der Abstand Z zwischen dem Anbauteil A und dem Strukturbauteil S durch Drehen der Hohlschraube 10 verändert werden.

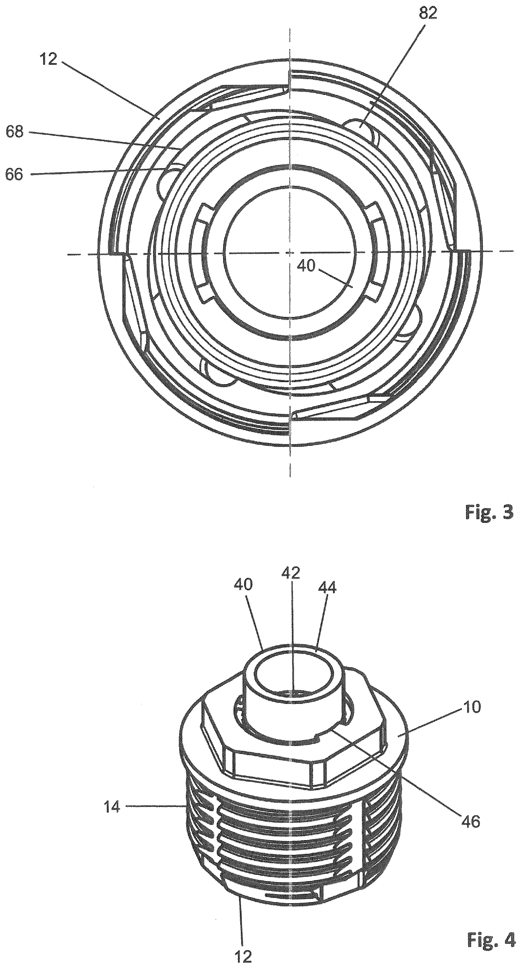

Figur 4 zeigt die bevorzugte Hohlschraube 10 in Kombination mit der Stützhülse 40 nach der Herstellung, vorzugsweise mit einem 2K-Spritzgussverfahren. Vorzugsweise bestehen demnach die Hohlschraube 10 und die Stützhülse 40 aus unterschiedlichen Kunststoffen. Diese werden aber bevorzugt im gleichen Herstellungsverfahren verarbeitet. Im Ergebnis liegen die hier gezeigten Hohlschraube 10 und Stützhülse 40 verbunden über eine Sollbruchstelle 46 nach dem Herstellungsverfahren innerhalb der Spritzgussform vor.

Es ist ebenfalls bevorzugt, ein 1K-Spritzgussverfahren für die Herstellung der Hohlschraube 10 und der Stützhülse 40 zu verwenden. Die im Weiteren beschriebenen bevorzugten Herstellungsrouten sind gleichermaßen für ein 1K-Spritzgussverahren wie für ein 2K-Spritzgussverfahren anwendbar.

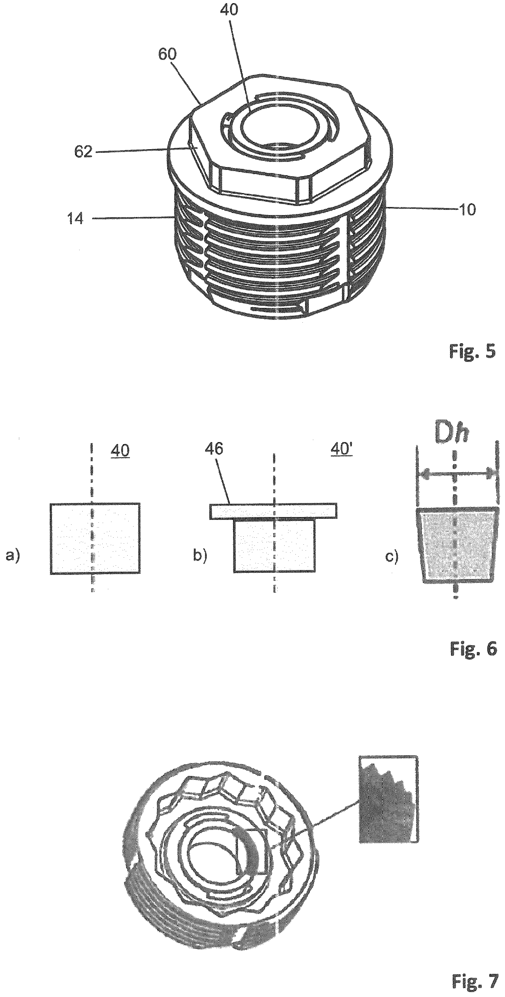

Gemäß einer ersten bevorzugten Herstellungsalternative liegen nach Abschluss des 2K-Spritzgussverfahrens die Hohlschraube 10 und die Stützhülse 40 gemäß Figur 4 vor. Nach dem Entformen werden die beiden Teile getrennt und die Stützhülse 40 wird in die rohrförmige Befestigungsöffnung 16 der Hohlschraube 10 eingesetzt, um die Anordnung gemäß Figur 5 zu erzielen.

Gemäß einer weiteren bevorzugten Herstellungsalternative wird während des Entformens der Anordnung gemäß Figur 4 automatisch die Sollbruchstelle 46 getrennt und die Stützhülse 40 in die Befestigungsöffnung 16 gedrückt. Zu diesem Zweck ist das Spritzgusswerkzeug angepasst, um die Sollbruchstelle 46 zu lösen und die Hohlschraube 10 und die Stützhülse 40 miteinander zu verbinden. Resultat ist wieder bevorzugt die Anordnung gemäß Figur 5 mit dem Vorteil, dass nach dem Entformen kein weiterer Arbeitsschritt erforderlich ist. Vielmehr fällt die Kombination aus Hohlschraube 10 und Stützhülse 40 verarbeitbar aus dem Spritzgusswerkzeug.

Die Stützhülse 40 innerhalb der rohrförmigen Befestigungsöffnung 16 realisiert über ihre Länge ein Spiel zwischen der Stützscheibe 50 und dem Befestigungskragen 20. Dadurch wird ein Klemmen der Hohlschraube 10 aufgrund der Verbindung zwischen dem Gewindebolzen 90 und dem Strukturbauteil S vermieden.

Die Stützhülse 40 wird vorzugsweise reibschlüssig in der Befestigungsöffnung 16 gehalten. Daher bestimmt eine Reibung zwischen der Stützhülse 40 und einer Innenwand der Befestigungsöffnung 16 einen Drehwiderstand der Hohlschraube 10 gegen das Verdrehen der Hohlschraube 10 um die Längsachse L. Dieser Drehwiderstand sichert vorzugsweise eine eingestellte Winkelposition der Hohlschraube 10 um die Längsachse L. Zudem wirkt der Drehwiderstand stabilisierend gegen mögliche Vibrationen des Verstellelements 1, die ein Verdrehen der Hohlschraube 10 zur Folge haben könnten.

Der Reibschluss zwischen der Innenseite der Befestigungsöffnung 16 und der radialen Außenseite der Stützhülse 40 ist vorzugsweise abhängig von der Form der Stützhülse 40. Gemäß einer bevorzugten Ausgestaltung ist die Stützhülse 40 hohlzylindrisch ausgebildet (siehe Figur 6a). Zur Steigerung des Drehwiderstands sind an der radialen Außenseite 48 der Stützhülse 40 und/oder an der radialen Innenseite 26 radial vorstehende Axialrippen 28, eine Rändelung, vorstehende Noppen und/oder Verzahnungen vorgesehen.

Gemäß einer weiteren bevorzugten Ausgestaltung der Stützhülse 40 weist diese einen umlaufenden Endkragen 46 auf (siehe Figur 6b). Der Endkragen 46 stellt eine zusätzliche Anlagefläche an der Hohlschraube 10 bereit, die den Drehwiderstand erhöht sowie eine axiale Begrenzung in Richtung Befestigungsöffnung 16 bereitstellt. Zudem ist es bevorzugte, an der radialen Außenseite der Stützhülse 40' die gleichen Merkmale vorzusehen, wie in der Stützhülse 40 gemäß Figur 6a.

Als weitere bevorzugte Ausführungsform zeigt Figur 6 eine kegelstumpfartig geformte Stützhülse 40 ". Die kegelstumpfartige Stützhülse 40 " hat einen Außendurchmesser Dₕ. Der Außendurchmesser Dₕ ist vorzugsweise größer als der Innendurchmesser der Befestigungsöffnung 16. Zudem ist es bevorzugt, die radiale Außenseite mit den gleichen konstruktiven Merkmalen vorzusehen, wie die Stützhülse 40 gemäß Figur 6a.

Weiter bevorzugt zeigt Fig. 7 an einer Stirnseite der Stützhülse 40 zugewandt zur Stützscheibe 50 (nicht gezeigt) partielle Ausnehmungen, Verrippungen, Verzahnungen oder eine beliebige Auswahl oder Kombination davon. Diese dienen vorzugsweise einer Reibwerterhöhung zwischen dem Befestigungsmittel 90 und der Stützhülse 40 vermittelt über die Stützscheibe 50.

Gemäß einer weiteren bevorzugten Ausgestaltung vorliegender Erfindung weist die Hohlschraube 10 am ersten axialen Ende 6 benachbart zum Befestigungskragen 20 an der radialen Außenseite ein Antriebsmerkmal 60 auf. Erfindungsgemäß bevorzugt ist das Antriebsmerkmal 60 ein Mehrkant, vorzugsweise ein Sechskant. Dieser ist direkt an der Außenseite der Hohlschraube 10 angeordnet.

Gemäß einer weiteren bevorzugten konstruktiven Alternative ist am ersten axialen Ende 6 ein axialer Vorsprung 62 vorgesehen. Dieser hat vorzugsweise einen kleineren Durchmesser als die Hohlschraube 10 im Bereich des Außengewindes 14. Auf diese Weise besitzt das Antriebsmerkmal 62 einen radialen Freiraum, der den Angriff eines formschlüssig passenden Werkzeugs erleichtert.

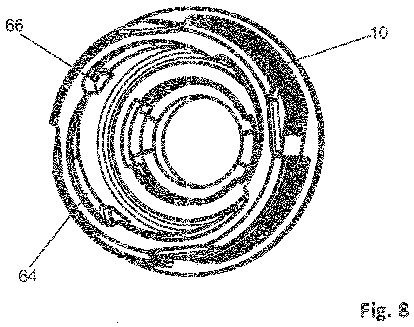

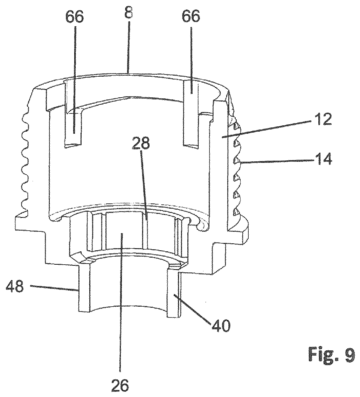

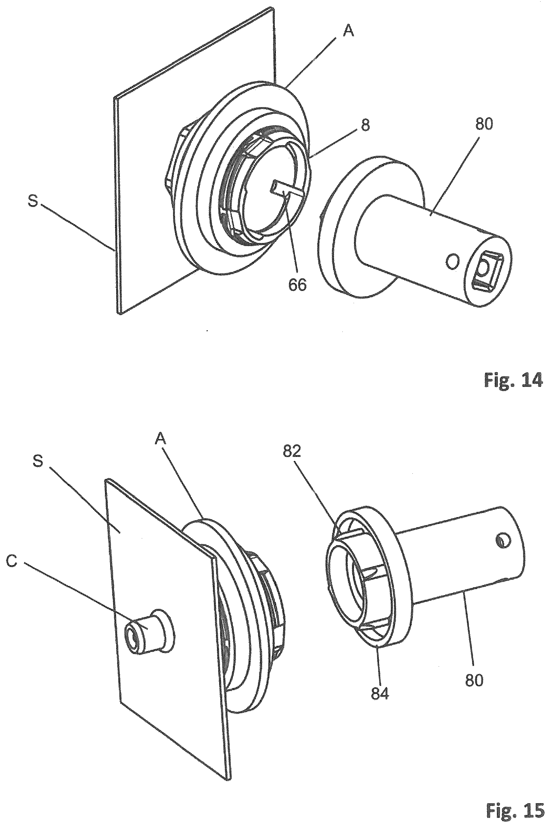

Gemäß einer weiteren bevorzugten Ausführungsform vorliegender Erfindung weist die Hohlschraube 10 an dem zweiten axialen Ende 8 ein radial innenliegendes Antriebsmerkmal 64 auf. Das innenliegende Antriebsmerkmal 64 ist vorzugsweise angepasst, um mit einem Werkzeug 80 eine formschlüssige Drehverbindung zu bilden. Dazu weist die radiale Innenseite der umlaufenden Wand 12 eine Mehrzahl von axial verlaufenden radial auswärts vertieften Nuten 66 auf. Die Nuten 66 sind vorzugsweise gleichmäßig auf dem inneren Umfang der Hohlschraube 10 verteilt. Das formschlüssig angepasste Werkzeug 80 weist gleich verteilte axiale Stege 82auf, die in die Nuten 66 eingreifen. (siehe Figuren 8, 9, 12, 14)

Die Nuten 66 erstrecken sich beginnend am zweiten axialen Ende 8 in axialer Richtung. Das von dem zweiten axialen Ende 8 abgewandte Ende der Nuten 66 bildet jeweils eine radiale Vertiefung, um den eingreifenden axialen Steg 82 des Werkzeugs 80 zu halten. In einer bestimmten axialen Tiefe der Nuten 66 verbinden bevorzugt Auflaufschrägen 68 benachbarte Nuten 66. Die Auflaufschrägen 68 verringern die radiale Höhe der radialen Begrenzungswände der radialen Vertiefung 66. Erreicht ein eingreifender Axialsteg 82 die Auflaufschräge 68 und verlässt die untere Nut 66, weil das Werkzeug 80 von dem zweiten axialen Ende 8 entfernt wird, dann wird die formschlüssige Verbindung zwischen dem Werkzeug 80 und der Hohlschraube 10 gelöst.

Wird das Werkzeug 80 beispielsweise im Uhrzeigersinn gedreht, wird die Hohlschraube 10 in das Anbauteil A geschraubt. Dabei bewegt sich das Anbauteil A in Richtung des zweiten axialen Endes 8 und trifft auf das Werkzeug 80 in Form der Schürze 84. Die Schürze 84 umgibt die Axialstege 82 in einem radialen Abstand. Zudem erstreckt sich die Schürze 84 in axialer Richtung, sodass sie teilweise die Axialstege 82 überdeckt.

Wird die Hohlschraube 10 in das Anbauteil A eingeschraubt, wird das Werkzeug 80 durch das Anbauteil A über die Schürze 84 in Richtung zweites axiales Ende 8 geschoben. Durch diese Bewegung in axialer Richtung der Hohlschraube 10 werden die Axialstege 82 aus dem Eingriff in den Nuten 66 in den Bereich der Auflaufschrägen 68 verschoben, wodurch der Formschluss zwischen Werkzeug 80 und Hohlschraube 10 gelöst wird. Auf diese Weise wird verhindert, dass die Hohlschraube 10 aus dem Eingriff mit dem Anbauteil A geschraubt werden kann.

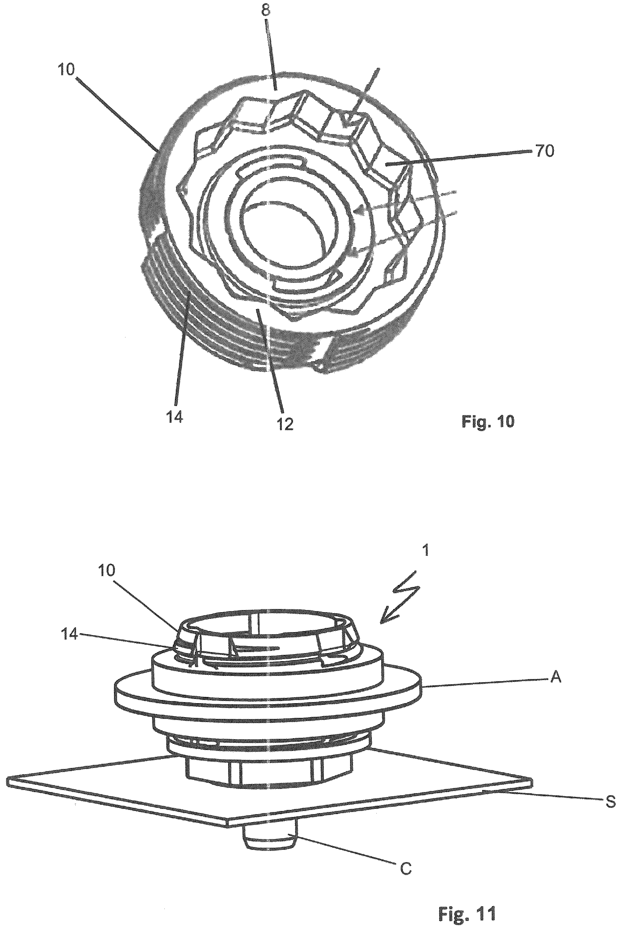

Eine weitere bevorzugte Ausführungsform eines innenliegenden formschlüssigen Antriebsmerkmals zeigt Figur 10. An der radialen Innenseite der Wand 12 ist ein Mehrkantprofil 70 vorgesehen. In dieses kann ein komplementär geformtes Werkzeug eingreifen, sodass ein Drehmoment zwischen Werkzeug und Hohlschraube 10 übertragbar ist. Vorzugsweise ist das Werkzeug ähnlich zum Werkzeug 80 mit Schürze 84 ausgebildet. Anstelle der Axialstege 82 ist eine Mehrkantstruktur ausgebildet, die in das Mehrkantprofil 70 formschlüssig eingreift.

Figur 11 zeigt eine bevorzugte Ausführungsform eines Verstellelements 1, das an einem Strukturbauteil S über eine Blindnietmutter C befestigt ist. Die Blindnietmutter C wurde in einer Befestigungsöffnung B des Strukturbauteils S gesetzt. Das Verstellelement 1 ist über einen Gewindebolzen 90 (nicht gezeigt) mit der Blindnietmutter C verschraubt. Das Anbauteil A ist auf das Außengewinde 14 der Hohlschraube 10 aufgeschraubt und dort befestigt. Vorzugsweise ist das Strukturbauteil S ein Teil der Karosserie eines Fahrzeugs und das Anbauteil A eine Leuchte.

Die Figuren 12 und 13 illustrieren eine bevorzugte vereinfachte Installation des Anbauteils A an dem Strukturbauteil S. Vorzugsweise wird zur Vorbereitung des Installationsverfahrens das Verstellelement 1 in einer Öffnung des Anbauteils A, vorzugsweise eine Leuchte, eingeschraubt. Damit liegen Anbauteil A und Verstellelement 1 als vorbereitete Komponente für den Werker vor, der diese nur noch an dem Strukturbauteil S befestigen und das Anbauteil A in seiner Position einstellen muss.

Um dem Werker die Befestigung des Anbauteils A am Strukturbauteil S zu erleichtern, ist im Strukturbauteil S eine Befestigungsöffnung B in Form einer Gewindeöffnung vorgesehen. Gemäß einer ersten bevorzugten Ausführungsform vorliegender Erfindung weist die Befestigungsöffnung B ein Innengewinde an ihrer radialen Innenwand auf. Das Anbauteil A mit Verstellelement 1 und einem darin verliersicher angeordneten Gewindebolzen 90 mit Stützscheibe 50 wird vorzugsweise dem Werker bereitgestellt. Der Werker schraubt dann den Gewindebolzen 90 in die Befestigungsöffnung B ein und befestigt das Anbauteil A. Danach wird mithilfe des Werkzeugs 80 der Abstand zwischen Anbauteil A und dem Strukturbauteil S nach einem gewünschten Spaltmaß verändert.

Gemäß einer weiteren bevorzugten Ausführungsform vorliegender Erfindung ist in der Befestigungsöffnung B eine Blindnietmutter C befestigt. Diese stellt ein Befestigungsgewinde für den Gewindebolzen 90 bereit. Entsprechend läuft das Installationsverfahrens wie oben beschrieben ab, nur dass der Gewindebolzen 90 in das Innengewinde der gesetzten Blindnietmutter C eingeschraubt wird (siehe Figur 13).

Weiterhin bevorzugt weist das vorinstallierte Verstellelement 1 am Anbauteil A bereits eine auf dem Gewindebolzen 90 angeordnete Blindnietmutter C auf. Somit ordnet der Werker vorzugsweise das Anbauteil A passend in dem Strukturbauteil S an, wobei der Schaft 92 des Gewindebolzens 90 mit vorinstallierter Blindnietmutter C in die Befestigungsöffnung B des Strukturbauteils S eingefädelt wird. Sobald die Blindnietmutter C passend angeordnet ist, startet der Werker eine Drehung des Gewindebolzens 90 mithilfe eines passenden Werkzeugs. Mit der Drehung des Gewindebolzens 90 wird die Blindnietmutter C in der Befestigungsöffnung B des Strukturbauteils gesetzt und das Verstellelement 1 befestigt. Nachfolgend stellt der Werker den Abstand zwischen dem Strukturbauteil S und dem Anbauteil A ein (siehe Figur 13).

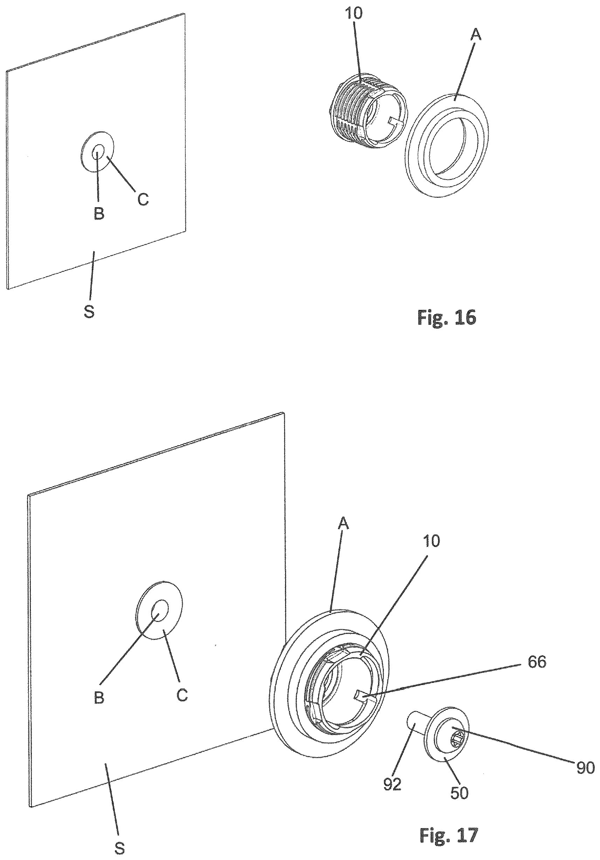

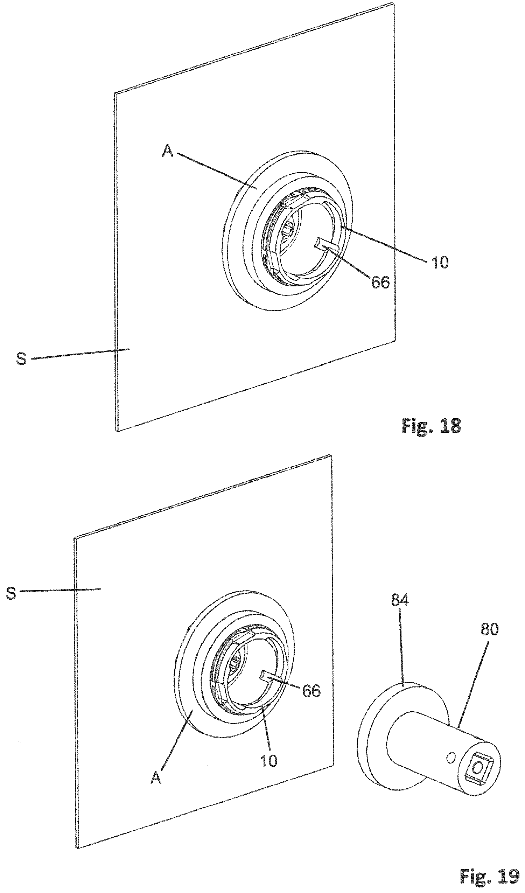

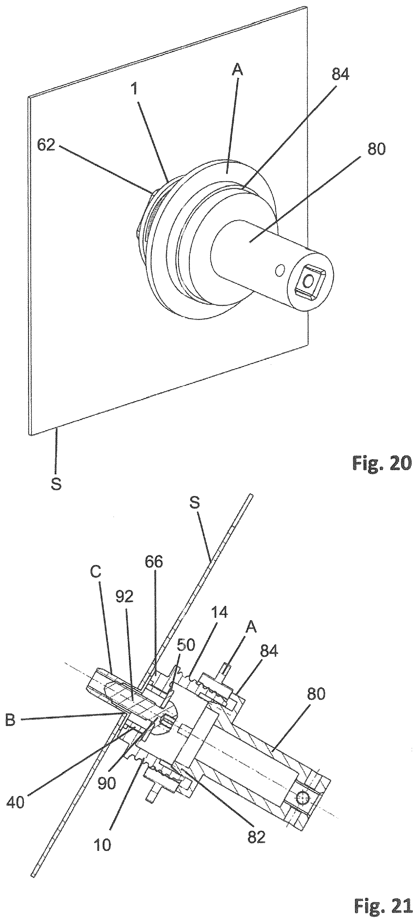

In den Figuren 16-18 sind bevorzugte Schritte eines Installationsverfahrens des Anbauteils A an einem Strukturbauteil S mithilfe eines erfindungsgemäß bevorzugten Verstellelements 1 dargestellt. Ergänzend dazu zeigen die Figuren 19 und 20 bevorzugte Schritte, um einen Abstand zwischen dem Strukturbauteil S und dem Anbauteil A nach einem gewünschten Spaltmaß oder anderen Anordnungsvorstellungen zu verändern.

Zunächst wird vorzugsweise das Strukturbauteil S mit einer Befestigungsöffnung B und einer darin befestigten Blindnietmutter C bereitgestellt (Schritt S1, Figur 16).

Als weitere bevorzugte Vorbereitung der Installation des Anbauteils A wird die Hohlschraube 10 oder das vollständige Verstellelement 1 in eine Öffnung des Anbauteils A eingeschraubt (Schritt S2a, Figur 16).

Gemäß einer weiteren bevorzugten Ausgestaltung wird das Anbauteil A bereits mit daran befestigtem Verstellelement 1 geliefert oder bereitgestellt (Schritt S2b). Damit entfällt für den Werker ein Einschraubens des Verstellelements 1, insbesondere der Hohlschraube 10, in einer Öffnung des Anbauteils A.

Weiterhin erfindungsgemäß bevorzugt wird oder ist der Gewindebolzen 90 gemeinsam mit der Stützscheibe 50 innerhalb der axialen Stützhülse 40 angeordnet (Schritt S3). Aufgrund der Anordnung der Stützhülse 40 zwischen der Stützscheibe 50 und dem Strukturbauteil S ist die Hohlschraube 10 auch nach dem Festziehen des Gewindebolzens 90 am Strukturbauteil S drehbar gehalten (Figuren 17, 18).

Nachdem der Gewindebolzen 90 im Verstellelement 1 und in der Befestigungsöffnung B des Strukturbauteils S angeordnet worden ist, wird der Gewindebolzen 90 mit dem Gewinde der Befestigungsöffnung B verschraubt und damit befestigt (Schritt S4a).

Vor oder während des Festdrehens des Gewindebolzens 90 in der Befestigungsöffnung B wird das Verstellelement 1 in der Ebene des Strukturbauteils verschoben, um Toleranzen auszugleichen (siehe oben und Figur 1).

Der bevorzugte laterale Toleranzausgleich wird dadurch ermöglicht, dass der Innendurchmesser der Stützhülse 40 größer ist als der Außendurchmesser des Schafts 92 des Gewindebolzens 90, der die Stützhülse 40 durchläuft. (Schritt S4b)

Nachdem das Anbauteil A über das Verstellelement 1 am Strukturbauteil S befestigt worden ist, wird mit dem formschlüssig wirkenden Werkzeug 80 die Hohlschraube 10 gedreht. Mithilfe der Drehung der Hohlschraube 10 verändert sich der Abstand zwischen dem Strukturbauteil S und dem Anbauteil A. (Schritt S5)

Das formschlüssig wirkende Werkzeug 80 greift vorzugsweise in das zweite axiale Ende 8 der Hohlschraube 10 ein. Dort ist bevorzugt an der radialen Innenseite der Wand 12 eine Struktur vorgesehen, die eine formschlüssige und lösbare Drehverbindung mit dem Werkzeug 80 gewährleistet (siehe Figuren 19, 21 und 10).

Es ist ebenfalls bevorzugt, mit einem Werkzeug die Hohlschraube 10 über das radial äußere Antriebsmerkmal 60 zu drehen, um den Abstand passend einzustellen (Schritt S6).

Wie man anhand von der Schnittdarstellung in Figur 21 erkennen kann, sorgt die Schürze 84 des Werkzeugs 80 dafür, dass die Hohlschraube 10 nicht aus dem Anbauteil A geschraubt wird (siehe oben).

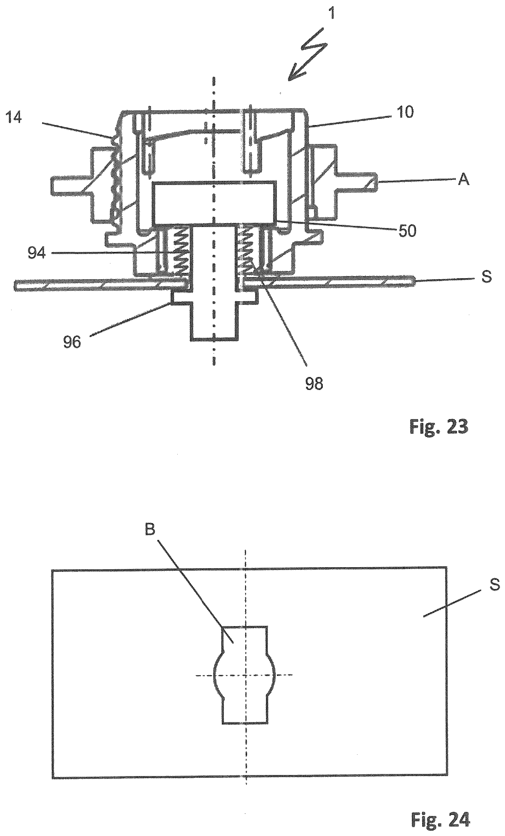

Der Vollständigkeit halber und unter Bezugnahme auf die Figuren 23 bis 26 werden verschiedene bevorzugte alternative Ausführungsformen des Befestigungsmittels gezeigt, die anstelle des Gewindebolzens 90 verwendbar sind. So zeigt Figur 23 die Verwendung eines Rastbolzens 94, der einen Verriegelungssteg 96 aufweist, in Verbindung mit einem zusätzlichen Federelement 98 beispielsweise in Form einer umlaufenden Spiralfeder oder eines Elastomerrings als Befestigungsmittel. Die dazugehörige Figur 24 verdeutlicht die erforderliche Befestigungsöffnung B im Strukturbauteil S.

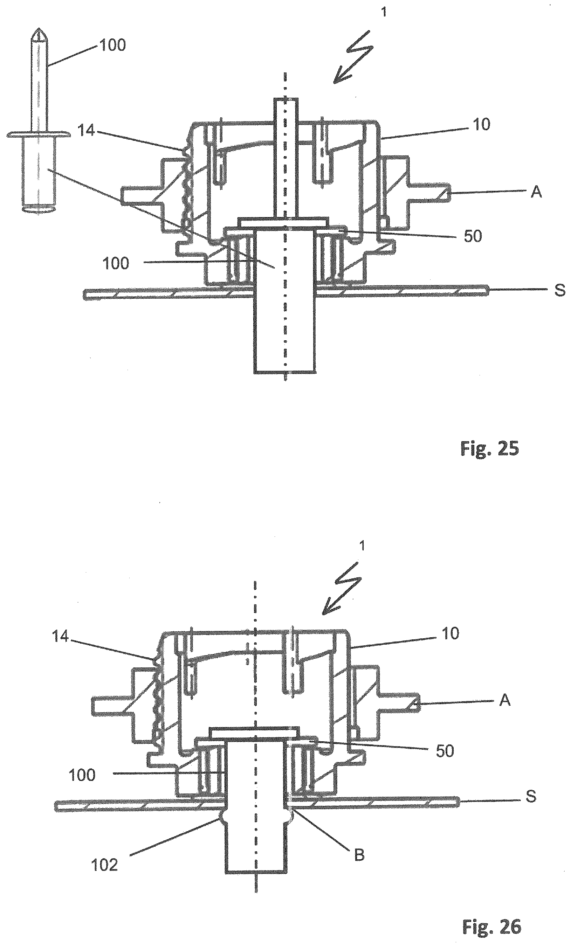

Die Figuren 25 und 26 wiederum zeigen die Verwendung eines Blindniets 100 als Befestigungsmittel. In Figur 25 befindet sich das Verstellelement 1 in einer unbefestigten Anordnung in der Befestigungsöffnung B des Strukturbauteils S, wobei ergänzend eine schematische Einzeldarstellung des verwendeten Blindniets 100 links in Figur 25 gezeigt wird. Figur 26 illustriert demgegenüber das Verstellelement 1 in einer befestigten Anordnung. Hier ist daher ersichtlich, dass eine Stauchwulst 102 ausgebildet wurde.

Diese verschiedenen bevorzugten Befestigungsmittel erfüllen alle die gleiche Funktion wie der Gewindebolzen 90 als Befestigungsmittel. Insbesondere wird mittels dieser Befestigungsmittel das Verstellelement 1 am Strukturbauteil S befestigt, wobei eine Drehung der Hohlschraube 10 auch nach Befestigung der Hohlschraube 10 an dem Strukturbauteil S realisierbar ist.

### 6. Bezugszeichenliste

- 1: Verstellelement
- 6: erstes axiales Ende
- 8: zweites axiales Ende
- 10: Hohlschraube
- 12: umlaufende Wand
- 14: radiales Außengewinde der Hohlschraube 10
- 16: rohrförmige Befestigungsöffnung
- 18: Innenseite der Hohlschraube 10
- 20: Befestigungskragen
- 22: innerer radial umlaufender Rand
- 24: äußere radial umlaufender Rand
- 26: radiale Innenseite des Befestigungskragens
- 28: Axialrippen am Befestigungskragen
- 40: Stützhülse
- 42: axial inneres Ende
- 44: axial äußeres Ende
- 46: Sollbruchstelle
- 50: Stützscheibe
- 52: zentrale Öffnung der Stützscheibe 50
- 60: Antriebsmerkmal
- 62: äußeres Antriebsmerkmal
- 64: inneres Antriebsmerkmal
- 66: Nuten
- 68: Auflaufschrägen
- 80: Werkzeug
- 82: Axialsteg
- 84: Schürze
- 90: Gewindebolzen
- 92: Schaft des Gewindebolzens 90
- 94: Rastbolzen
- 96: Verriegelungssteg
- 98: Federelement
- 100: Blindniet
- 102: Stauchwulst
- A: Anbauteil
- S: Strukturbauteil
- B: Befestigungsöffnung
- C: Blindnietmutter
- L: Längsachse der Hohlschraube 10

## Patentansprüche

1. Ein Verstellelement (1), mit dem eine Komponente befestigbar und im Raum positionierbar ist, das die folgenden Merkmale aufweist:
a. eine hülsenartige Hohlschraube (10) mit einem ersten (6) und einem zweiten axialen Ende (8), einem Antriebsmerkmal (60; 62) und einem Außengewinde (14), an dem eine Komponente (A) haltbar und in axialer Richtung der Hohlschraube (10) positionierbar ist,
b. benachbart zu dem ersten axialen Ende (6) weist die Hohlschraube (10) einen integral ausgebildeten und radial einwärts ragenden Befestigungskragen (20) auf, der eine rohrförmige Befestigungsöffnung (16) der Hohlschraube (10) umläuft, und
c. innerhalb der rohrförmigen Befestigungsöffnung (16) ist eine axiale Stützhülse (40) angeordnet, so dass die Hohlschraube (10) mit einem Befestigungsmittel (90) an einem Bauteil (S) drehbar befestigbar ist, welches die axiale Stützhülse (40) durchläuft.

2. Das Verstellelement (1) gemäß Patentanspruch 1, dessen axiale Stützhülse (40) am ersten axialen Ende (6) mit der Hohlschraube (10) bündig abschließt und über ein innerhalb der Hohlschraube (10) liegendes Ende (22) der rohrförmigen Befestigungsöffnung (16) hinausragt, sodass die Hohlschraube (10) mit dem Befestigungsmittel (90) drehbar befestigbar ist.

3. Das Verstellelement (1) gemäß Patentanspruch 2, an dessen innerhalb der Hohlschraube (10) liegendem Ende (42) der axialen Stützhülse (40) eine Stützscheibe (50) mit einer zentralen Öffnung (52) angeordnet ist, deren äußerer Scheibendurchmesser einen Außendurchmesser der axialen Stützhülse (40) übersteigt und deren Öffnungsdurchmesser kleiner ist als ein Innendurchmesser der axialen Stützhülse (40), sodass ein lateraler Toleranzausgleich über eine Kombination der axialen Stützhülse (40), der Stützscheibe (50) und dem Befestigungsmittel (90) bereitstellbar ist.

4. Das Verstellelement (1) gemäß einem der vorhergehenden Patentansprüche, dessen Hohlschraube (10) an einer Innenseite und/oder einer Außenseite das Antriebsmerkmal (60) aufweist.

5. Das Verstellelement (1) gemäß Patentanspruch 4, dessen Hohlschraube (10)
a) am ersten axialen Ende (6) einen äußeren Mehrkant (62) als Antriebsmerkmal aufweist, der zumindest teilweise die rohrförmige Befestigungsöffnung (16) umgibt, und/oder
b) benachbart zum zweiten axialen Ende (8) ein formschlüssiges inneres Antriebsmerkmal (64), insbesondere einen inneren Mehrkant, aufweist.

6. Das Verstellelement (1) gemäß einem der vorhergehenden Patentansprüche, in dem
a) die Hohlschraube (10) und/oder die Stützhülse (40) einen Rest einer gelösten und zuvor verbindenden Sollbruchstelle zwischen der Stützhülse (40) und der Hohlschraube (10) aufweisen/aufweist und/oder
b) die Hohlschraube (10) und die Stützhülse (40) aus demselben Kunststoff oder aus verschiedenen Kunststoffen bestehen.

7. Ein Strukturbauteil (S) mit einer Befestigungsöffnung (B), an der das Verstellelement (1) gemäß einem der vorhergehenden Patentansprüche mit einem Befestigungsmittel (90) befestigt ist.

8. Das Strukturbauteil (S) gemäß Patentanspruch 7, wobei auf dem Außengewinde (14) der Hohlschraube (10) des Verstellelements (1) ein Bauteil (A) derart befestigt ist, dass Toleranzen zwischen dem Strukturbauteil (S) und dem Bauteil (A) einstellbar sind.

9. Ein Installationsverfahren, mit dem ein Anbauteil (A), insbesondere eine Leuchte, an einem Strukturbauteil (S), insbesondere eine Fahrzeugkarosserie, befestigbar und positionierbar ist, wobei das Installationsverfahren die folgenden Schritte aufweist:
a. Einschrauben (S2a, S2b) der Hohlschraube (10) des Verstellelements (1) gemäß einem der vorhergehenden Patentansprüche 1 bis 6 in eine Halteöffnung des Anbauteils (A),
b. Befestigen (S4) der Hohlschraube (10) mit Anbauteil (A) an einer Befestigungsöffnung (B) des Strukturbauteils (S) mit einem Befestigungsmittel (90), das innerhalb der rohrförmigen Befestigungsöffnung (16) des Befestigungskragens (20) angeordnet ist, und
c. Drehen (S5) der am Strukturbauteil (S) befestigten Hohlschraube (10), so dass das Anbauteil (A) entlang einer Längsachse (L) der Hohlschraube (10) versetzt wird.

10. Das Installationsverfahren gemäß Patentanspruch 9, mit dem weiteren Schritt:
Bereitstellen (S1) der Befestigungsöffnung (B) des Strukturbauteils (S) mit einem Gewinde, vorzugsweise mittels einer Schweißmutter oder einer Blindnietmutter (C), welches passend zu einem Gewindebolzen (90) als Befestigungsmittel ausgebildet ist.

11. Das Installationsverfahren gemäß einer der vorhergehenden Patentansprüche 9 und 10, mit dem weiteren Schritt:
a. Anordnen (S3) des Gewindebolzens (90) in Kombination mit einer Stützscheibe (50) in der axialen Stützhülse (40), so dass die Hohlschraube (10) am Strukturbauteil (S) drehbar befestigt ist, oder
b. Drehen (S6) der befestigten Hohlschraube (10) über ein äußeres (60) oder ein inneres Antriebsmerkmal (64), um die axiale Position des Anbauteils (A) auf der Hohlschraube (10) zu verändern.

12. Ein Spritzgussverfahren, mit dem ein Verstellelement (1) gemäß einem der Patentansprüche 1-6 herstellbar ist, das die folgenden Schritte aufweist:
a. Bereitstellen einer Spritzgussform mit den komplementären Formmerkmalen zu dem Verstellelement (1),
b. Spritzgießen des Verstellelements (1) mit einem ersten Kunststoff.

13. Das Spritzgussverfahren gemäß Patentanspruch 12 mit dem weiteren Schritt:
c. Spritzgießen der Stützhülse (40) in der Spritzgussform, sodass die Hohlschraube (10) und die Stützhülse (40) verbunden über eine Sollbruchstelle vorliegen.

14. Das Spritzgussverfahren gemäß Patentanspruch 13 mit dem weiteren Schritt:
d. Entformen der Hohlschraube (10) mit der Stützhülse (40), wobei die Hohlschraube (10) und die Stützhülse (40) an der Sollbruchstelle voneinander getrennt und die Stützhülse (40) in der rohrförmigen Befestigungsöffnung (16) angeordnet wird.

15. Das Spritzgussverfahren gemäß einem der vorhergehenden Patentansprüche 12 bis 14, wobei das Spritzgussverfahren ein 1K-Spritzgussverfahren ist und die Hohlschraube (10) und die Stützhülse (40) aus dem gleichen Kunststoff bestehen oder wobei das Spritzgussverfahren ein 2K-Spritzgussverfahren ist und die Hohlschraube (10) und die Stützhülse (40) aus unterschiedlichen Kunststoffen bestehen.

## Claims

1. An adjusting element (1) with which a component is fastenable and positionable in the space, including the following features:
a. a sleeve-like hollow screw (10) with a first (6) and a second axial end (8), a drive feature (60; 62) and an outer thread (14) to which a component (A) is retainable and is positionable in axial direction of the hollow screw (10),
b. adjacent to the first axial end (6), the hollow screw (10) comprises a fastening collar (20) which is configured integrally and projects radially to the inside and which encompasses a tubular fastening opening (16) of the hollow screw (10), and
c. an axial support sleeve (40) is arranged within the tubular fastening opening (16) so that the hollow screw (10) is rotatably fastenable with a fastening means (90) to a component (S), which passes through the axial support sleeve (40).

2. The adjusting element (1) according to claim 1, the axial support sleeve (40) of which is flush with the hollow screw (10) at the first axial end (6) and projects beyond an end (22), located inside of the hollow screw (10), of the tubular fastening opening (16) so that the hollow screw (10) is rotatably fastenable with the fastening means (90).

3. The adjusting element (1) according to claim 2, to which end (42) of the support sleeve (40) located inside of the hollow screw (10), a support disc (50) with a central opening (52) is arranged, the outer disc diameter of which exceeds an outer diameter of the axial support sleeve (40) and the opening diameter of which is smaller than an inner diameter of the axial support sleeve (40) so that a lateral tolerance compensation is providable by means of a combination of the axial support sleeve (40), the support disc (50) and the fastening means (90).

4. The adjusting element (1) according to one of the preceding claims, the hollow screw (10) of which comprises the drive feature (60) on an inside and/or an outside.

5. The adjusting element (1) according to claim 4, the hollow screw (10) of which
a) comprises an outer polygon (62) as the drive feature at the first axial end (6), which encompasses at least partly the tubular fastening opening (16), and/or
b) includes a form fit inner drive feature (64), in particular an inner polygon, adjacent to the second axial end (8).

6. The adjusting element (1) according to one of the preceding claims, in which
a) the hollow screw (10) and/or the support sleeve (40) comprise(s) a remainder of a released and previously connecting predetermined breaking point between the support sleeve (40) and the hollow screw (10) and/or
b) the hollow screw (10) and the support sleeve (40) are made of the same plastic material or of different plastic materials.

7. A structural component (S) with a fastening opening (B) to which the adjusting element (1) according to one of the preceding claims is fastened with a fastening means (90).

8. The structural component (S) according to claim 7, wherein a component (A) is fastened on the outer thread (14) of the hollow screw (10) of the adjusting element (1) so that tolerances between the structural component (S) and the component (A) are settable.

9. An installation method with which an add-on part (A), in particular a light, is fastenable and positionable to a structural component (S), in particular a vehicle body, with the installation method comprising the following steps:
a. screwing-in (S2a, S2b) the hollow screw (10) of the adjusting element (1) according to one of the preceding claims 1 to 6 into a retention opening of the add-on part (A),
b. fastening (S4) the hollow screw (10) with add-on part (A) to a fastening opening (B) of the structural component (S) with a fastening means (90) that is arranged within the tubular fastening opening (16) of the fastening collar (20), and
c. rotating (S5) the hollow screw (10) that is fastened to the structural component (S) so that the add-on part (A) is displaced along a longitudinal axis (L) of the hollow screw (10).

10. The installation method according to claim 9, with the further step:
providing (S1) the fastening opening (B) of the structural component (S) with a thread, preferably by means of a welding nut or a blind rivet nut (C), the thread being configured in a matching manner to a thread bolt (90) serving as a fastening means.

11. The installation method according to one of the preceding claims 9 and 10, with the further step:
a. arranging (S3) the thread bolt (90) in combination with a support disc (50) in the axial support sleeve (40) so that the hollow screw (10) is rotatably fastened to the structural component (S), or
b. rotating (S6) the fastened hollow screw (10) by means of an outer (60) or an inner drive feature (64) in order to change the axial position of the add-on part (A) on the hollow screw (10).

12. An injection molding method with which an adjusting element (1) according to one of the claims 1 to 6 is producible, comprising the following steps:
a. providing an injection mold having the complementary mold features with respect to the adjusting element (1),
b. injection molding the adjusting element (1) with a first plastic material.

13. The injection molding method according to claim 12 with the further step:
c. injection molding the support sleeve (40) in the injection mold so that the hollow screw (10) and the support sleeve (40) are available being connected by means of a predetermined breaking point.

14. The injection molding method according to claim 13 with the further step:
d. demolding the hollow screw (10) with the support sleeve (40), wherein the hollow screw (10) and the support sleeve (40) are separated from each other at the predetermined breaking point and the support sleeve (40) is arranged in the tubular fastening opening (16).

15. The injection molding method according to one of the preceding claims 12 to 14, wherein the injection molding method is a 1K injection molding method and the hollow screw (10) and the support sleeve (40) are made of the same plastic material or wherein the injection molding method is a 2K injection molding method and the hollow screw (10) and the support sleeve (40) are made of different plastic materials.

## Revendications

1. Élément de réglage (1) avec lequel un composant peut être fixé et positionné dans l'espace, lequel présente les caractéristiques suivantes :
a. une vis creuse du genre douille (10) avec une première (6) et une deuxième extrémité axiale (8), un élément d'entraînement (60 ; 62) et un filetage extérieur (14), sur lequel un composant (A) peut être maintenu et positionné dans la direction axiale de la vis creuse (10),
b. de façon adjacente à la première extrémité axiale (6), la vis creuse (10) présente un col de fixation (20) formé intégralement et faisant saillie radialement vers l'intérieur, lequel entoure une ouverture de fixation tubulaire (16) de la vis creuse (10), et
c. une douille d'appui axiale (40) est disposée à l'intérieur de l'ouverture de fixation tubulaire (16), de telle façon que la vis creuse (10) peut être fixée de façon rotative avec un moyen de fixation (90) à un élément (S) traversant la douille d'appui axiale (40).

2. Élément de réglage (1) selon la revendication 1, dont la douille d'appui axiale (40) se termine en affleurement avec la vis creuse (10) à la première extrémité axiale (6) et fait saillie vers l'extérieur au-delà d'une extrémité (22) de l'ouverture de fixation tubulaire (16) située à l'intérieur de la vis creuse (10), de sorte que la vis creuse (10) peut être fixée de façon rotative avec le moyen de fixation (90).

3. Élément de réglage (1) selon la revendication 2, dans lequel un disque d'appui (50) doté d'une ouverture centrale (52) est disposé à l'extrémité (42) de la douille d'appui axiale (40) située à l'intérieur de la vis creuse (10), dont le diamètre de disque extérieur dépasse un diamètre extérieur de la douille d'appui axiale (40) et dont le diamètre d'ouverture est inférieur à un diamètre intérieur de la douille d'appui axiale (40), de sorte qu'une compensation de tolérance latérale peut être assurée par une combinaison de la douille d'appui axiale (40), du disque d'appui (50) et du moyen de fixation (90).

4. Élément de réglage (1) selon l'une des revendications précédentes, dont la vis creuse (10) présente l'élément d'entraînement (60) sur un côté intérieur et/ou sur un côté extérieur.

5. Élément de réglage (1) selon la revendication 4, dont la vis creuse (10)
a) présente un polygone extérieur (62) en tant qu'élément d'entraînement à la première extrémité axiale (6), lequel entoure au moins partiellement l'ouverture de fixation tubulaire (16), et/ou
b) présente un élément d'entraînement intérieur à complémentarité de forme (64), en particulier un polygone intérieur, de façon adjacente à la deuxième extrémité axiale (8).

6. Élément de réglage (1) selon l'une des revendications précédentes, dans lequel
a) la vis creuse (10) et/ou la douille d'appui (40) présente/présentent un reste d'une zone de rupture théorique détachée et formant auparavant une liaison entre la douille d'appui (40) et la vis creuse (10) et/ou
b) la vis creuse (10) et la douille d'appui (40) sont constituées de la même matière plastique ou de matières plastiques différentes.

7. Élément de structure (S) doté d'une ouverture de fixation (B), à laquelle l'élément de réglage (1) selon l'une des revendications précédentes est fixé avec un moyen de fixation (90).

8. Élément de structure (S) selon la revendication 7, dans lequel un élément (A) est fixé de telle façon sur le filetage extérieur (14) de la vis creuse (10) de l'élément de réglage (1), que des tolérances entre l'élément de structure (S) et l'élément (A) peuvent être réglées.

9. Procédé d'installation permettant de fixer et de positionner un élément de montage (A), en particulier un luminaire, sur un élément de structure (S), en particulier une carrosserie de véhicule, dans lequel le procédé d'installation présente les étapes suivantes :
a. vissage (S2a, S2b) de la vis creuse (10) de l'élément de réglage (1) selon l'une des revendications précédentes 1 à 6 dans une ouverture de maintien de l'élément de montage (A),
b. fixation (S4) de la vis creuse (10) avec l'élément de montage (A) à une ouverture de fixation (B) de l'élément de structure (S) avec un moyen de fixation (90), lequel est disposé à l'intérieur de l'ouverture de fixation tubulaire (16) du col de fixation (20), et
c. rotation (S5) de la vis creuse (10) fixée à l'élément de structure (S), de telle façon que l'élément de montage (A) est décalé le long d'un axe longitudinal (L) de la vis creuse (10).

10. Procédé d'installation selon la revendication 9, comprenant l'étape supplémentaire suivante :
mise à disposition (S1) de l'ouverture de fixation (B) de l'élément de structure (S) avec un filetage, de préférence au moyen d'un écrou de soudage ou d'un écrou de rivet aveugle (C), lequel est formé de façon à correspondre à un boulon fileté (90) comme moyen de fixation.

11. Procédé d'installation selon l'une des revendications précédentes 9 et 10, comprenant l'étape supplémentaire suivante :
a. agencement (S3) du boulon fileté (90) en combinaison avec un disque d'appui (50) dans la douille d'appui axiale (40), de telle façon que la vis creuse (10) est fixée de façon rotative à l'élément de structure (S), ou
b. rotation (S6) de la vis creuse (10) fixée par le biais d'un élément d'entraînement extérieur (60) ou intérieur (64), afin de modifier la position axiale de l'élément de montage (A) sur la vis creuse (10).

12. Procédé de moulage par injection permettant de fabriquer un élément de réglage (1) selon l'une des revendications 1 à 6, lequel présente les étapes suivantes :
a. mise à disposition d'un moule à injection avec les caractéristiques de forme complémentaires à l'élément de réglage (1),
b. moulage par injection de l'élément de réglage (1) avec une première matière plastique.

13. Procédé de moulage par injection selon la revendication 12, comprenant l'étape supplémentaire suivante :
c. moulage par injection de la douille d'appui (40) dans le moule à injection, de manière à obtenir la vis creuse (10) et la douille d'appui (40) reliées par le biais d'une zone de rupture théorique.

14. Procédé de moulage par injection selon la revendication 13, comprenant l'étape supplémentaire suivante :
d. démoulage de la vis creuse (10) avec la douille d'appui (40), dans lequel la vis creuse (10) et la douille d'appui (40) sont séparées l'une de l'autre au niveau d'une zone de rupture théorique et la douille d'appui (40) est disposée dans l'ouverture de fixation tubulaire (16).

15. Procédé de moulage par injection selon l'une des revendications précédentes 12 à 14, dans lequel le procédé de moulage par injection est un procédé de moulage par injection à un composant et la vis creuse (10) et la douille d'appui (40) sont constituées de la même matière plastique ou dans lequel le procédé de moulage par injection est un procédé de moulage par injection à deux composants et la vis creuse (10) et la douille d'appui (40) sont constituées de matières plastiques différentes.
